# EUROPEAN PATENT SPECIFICATION

(11) **EP 3 804 146 B1**
(45) Date of publication and mention of the grant of the patent: **06.11.2024**
(21) Application number: 20822168.9
(22) Date of filing: 08.06.2020
(51) Int. Cl.: H04M 1/72409, H04M 1/18, H04M 1/72454, H04W 4/02, H04W 4/90, H04B 1/3888

(54) **MOBILE DEVICE CASE AND METHOD OF DETECTING GUN SOUNDS USING A MOBILE DEVICE CASE**
GEHÄUSE EINER MOBILEN VORRICHTUNG UND VERFAHREN ZUR DETEKTION VON WAFFENGERÄUSCHEN UNTER VERWENDUNG EINES GEHÄUSES EINER MOBILEN VORRICHTUNG
BOÎTIER DE DISPOSITIF MOBILE ET PROCÉDÉ DE DÉTECTION DE SONS D'ARME À FEU À L'AIDE D'UN BOÎTIER DE DISPOSITIF MOBILE

(30) Priority: 11.06.2019 US 201962859852 P
(43) Date of publication of application: 14.04.2021
(73) Proprietor: Security Services Northwest, Inc., Sequim, Washington 98382 (US)
(72) Inventor: D'AMICO, Joseph N., Sequim, Washington 98382 (US)
(74) Representative: Murgitroyd & Company
(86) International application number: PCT/US2020/036620
(87) International publication number: WO 2020/251890

(56) References cited:
- US-A1- 2011 069 585
- US-A1- 2012 176 237
- US-A1- 2014 327 543
- US-A1- 2014 361 886
- US-A1- 2016 157 032
- US-A1- 2016 315 652
- US-A1- 2016 315 652
- US-A1- 2017 374 192
- US-B1- 9 652 975

## Description

### BACKGROUND

### Technical Field

The present disclosure generally relates to methods and devices for detecting threat events at one or more threat locations and transmitting the locations to users.

### Description of the Related Art

Threat events such as gun shootings often occur in many locations or situations. Typically, when a gun shooting event occurs, people are too busy running away just based on the sound of the gun without having precise knowledge of where the shooting occurred and when it occurred. Generally in an urgent situation like this, most of the people in the vicinity is unaware of the emergent situation or a victim unable to report it and are unavailable to notify others until it is too late. When faced with this urgent situation, trying to assess the situation and notifying the authorities or even waiting for notifications from the authorities may take up time. Further, during this course, valuable time that could be spent executing the solution by escaping or avoiding the gun shooting location can be wasted. US2016315652 A1 discloses a protective case for use with cellular phones. US2011069585 A1 discloses an acoustic sensor for use in a gunshot location system.

### BRIEF SUMMARY

The object of the invention is achieved by the subject-matter of the independent claims. Advantageous embodiments are defined in the dependent claims. Further examples are provided for facilitating the understanding of the invention.

### BRIEF DESCRIPTION OF THE SEVERAL VIEWS OF THE DRAWINGS

In the drawings, identical reference numbers identify similar elements or acts. The sizes and relative positions of elements in the drawings are not necessarily drawn to scale. For example, the shapes of various elements and angles are not necessarily drawn to scale, and some of these elements may be arbitrarily enlarged and positioned to improve drawing legibility. Further, the particular shapes of the elements as drawn, are not necessarily intended to convey any information regarding the actual shape of the particular elements, and may have been solely selected for ease of recognition in the drawings.
Figure 1 is an overview of an exemplary situation where a mobile device case capable of threat alert operates with a network system to alert users connected to the network, according to one illustrated implementation.
Figure 2A is a back view of an exemplary mobile device case capable of detecting threat related sounds, according to one illustrated implementation.
Figure 2B is a back view of an exemplary mobile device case having a different configuration, according to another illustrated implementation.
Figure 3 is a front view of an exemplary mobile device case capable of detecting threat related sounds, according to one illustrated implementation.
Figure 4 is a side view of an exemplary mobile device case capable of detecting threat related sounds, according to one illustrated implementation.
Figure 5 shows a high-level functional block diagram of a threat alert system for alerting a respective user associated with a first networked subscriber device.
Figure 6 shows an exemplary alert system comprising one or more threat management application servers and one or more networked devices external to the threat management application server.
Figure 7 shows a flow diagram of a workflow for sending an alert to a user.
Figures 8A-8C show an alert system may implement a method of operation for the threat management system having the networked connectivity device and the threat management application server.
Figure 9 is a user interface for an alerts list landing screen of a mobile application of an alert system, according to one illustrated implementation.
Figure 10 is a user interface for an alert details screen of a mobile application of an alert system, according to one illustrated implementation.
Figure 11 is a user interface for an alert details screen of a mobile application launching a map application in association with an alert system, according to one illustrated implementation.
Figure 12 is a user interface for an alert details screen of a mobile application showing escape routes through a map application in association with an alert system, according to one illustrated implementation.

### DETAILED DESCRIPTION

In the following description, certain specific details are set forth in order to provide a thorough understanding of various disclosed implementations. However, one skilled in the relevant art will recognize that implementations may be practiced without one or more of these specific details, or with other methods, components, materials, etc. In other instances, well-known structures associated with computer systems, server computers, and/or communications networks have not been shown or described in detail to avoid unnecessarily obscuring descriptions of the implementations. In other instances, well-known mathematical and statistical methods for performing statistical analyses and other well-known mathematical operation and well-known software program/algorithms have not been described in detail to avoid unnecessarily obscuring descriptions of the implementations.

Unless the context requires otherwise, throughout the specification and claims that follow, the word "comprising" is synonymous with "including," and is inclusive or open-ended (i.e., does not exclude additional, unrecited elements or method acts).

Reference throughout this specification to "one implementation" or "an implementation" means that a particular feature, structure or characteristic described in connection with the implementation is included in at least one implementation. Thus, the appearances of the phrases "in one implementation" or "in an implementation" in various places throughout this specification are not necessarily all referring to the same implementation. Furthermore, the particular features, structures, or characteristics may be combined in any suitable manner in one or more implementations. The term "embodiment" will be treated the same way as "implementation."

As used in this specification and the appended claims, the singular forms "a," "an," and "the" include plural referents unless the content clearly dictates otherwise. It should also be noted that the term "or" is generally employed in its sense including "and/or" as in "one or more of" unless the content clearly dictates otherwise.

The headings and Abstract of the Disclosure provided herein are for convenience only and do not interpret the scope or meaning of the implementations.

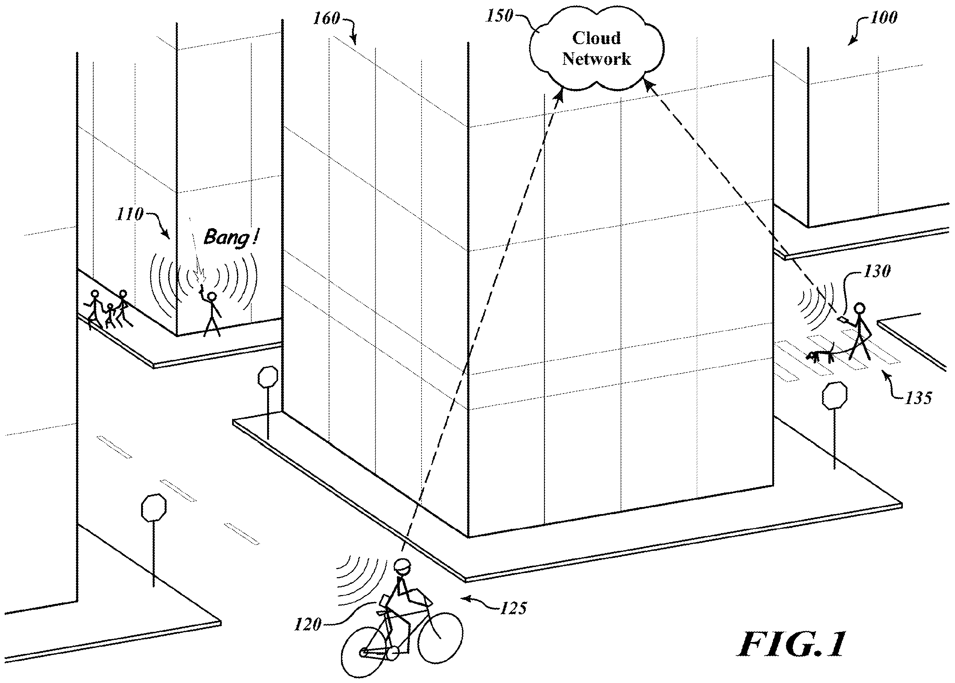

Figure 1 is an overview of an exemplary situation 100 where a mobile device case capable of threat alert operates with a network system 150 to alert users connected to the network, according to one illustrated implementation.

Figure 1 shows an example threat situation occurring in the middle of a city. When a gun shooter 110 fires a gun, mobile devices or cases 120 and 130 of people 125 and 135, respectively, in the vicinity pick up the gunshot sound using sensors, as discussed further below. For example, a bike rider 125 riding his bike has his mobile device or mobile device case 120 housing the mobile device. The mobile device case 120 of the bike rider 125 having one or more sound sensors (e.g., microphones) can pick up the gunshot sound from the gun shooter 110 and in conjunction with a processor of the mobile device, it can detect and locate the approximate location of the shooting.

Returning to Figure 1, a block away from the bike rider 125 is a pedestrian 135 with a dog. The pedestrian 135 also has a mobile device case 130 capable of detecting gunshot sounds similar to the mobile device case 120 of the bike rider 125. When the gun shooter 110 fires a gun, at the same point, the plurality of sound sensors in the mobile device case 130 in conjunction with a processor of the mobile device of the pedestrian 135 detects and locates the approximate location of the shooting. For example, the mobile device case 120 of the bike rider 125 receives the gunshot sounds through the sound sensors and transmits sound data or sound information to the mobile device of the bike rider 125. The term "sound data" used herein is a term to encompass any data received using the plurality of sound sensors. The sound data, for example, includes acoustic information associated with an acoustic source including secondary acoustic information reflected from a reflector originating from the acoustic source (e.g., indirect sounds that bounces from various objects surrounding the acoustic source). The sound data can also include noise data. The sound data can also include pre-processed data, such as an indication of the volume, location, duration, number of discrete sounds, or other characteristic of sound. The processor in the mobile device of the bike rider 125 may calculate the distance or the location of the gun shooter 110 based on the sound data received from the mobile device case 120. In calculating the location of the gun shooter 110, or to be specific, the location where the gun was shot by the gun shooter 110, global positioning system (GPS), global navigation satellite system (GNSS) can be used. A mobile device typically includes multiple sensors such as gyroscopes, accelerometers and GPS/GNSS sensors. In addition to using the sound data received from the mobile device case 120, the GPS/GNSS signals received on the mobile device can also be used to approximate the location of the gunshot sound. Similarly, the mobile device of the pedestrian 135 does the same processing as the mobile device of the bike rider 125. One or more users having a mobile device case according to the present disclosure can detect the sound and send the sound for processing to the mobile device, and further transmit to a network 150 (e.g., cloud system, server system, or the like) to share the gun shooting incidents with other users in interest.

The processor of the mobile device receives the sound data received from the microphones and analyzes the sound data. In this process, acoustic location related algorithms known in the art can be used. For instance, an acoustic location is the use of sound to determine both the distance of its source or reflector as well as the direction of its source or reflector. The acoustic location detecting can be done actively or passively, meaning that an active acoustic location involves the creation of sound in order to produce an echo, which is then analyzed to determine the location of the object in question. On the other hand, a passive acoustic location involves the detection of sound or vibration created by the object being detected, which is then analyzed to determine the location of the object in question. The embodiment as shown in Figure 1 shows an example of a passive acoustic location. However, in other embodiments or implementations, an active acoustic location related algorithms can be used. For example, an echo generator can be mounted on the mobile device case in case active acoustic location algorithms are used instead of passive acoustic location algorithms.

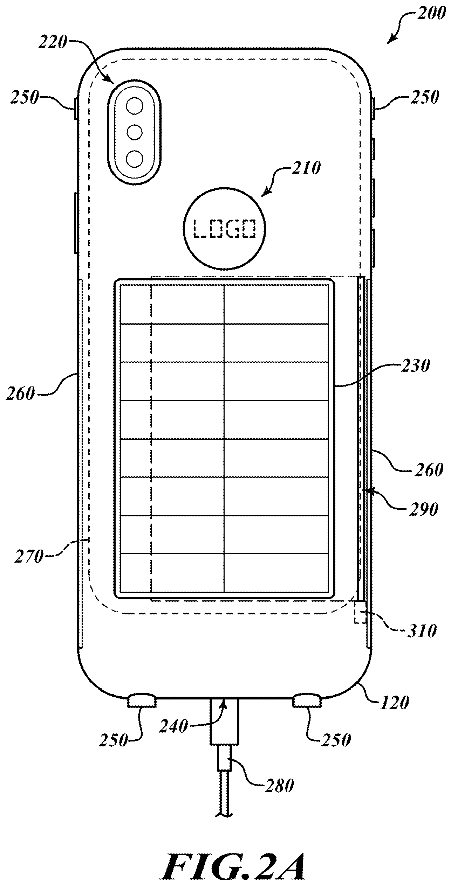

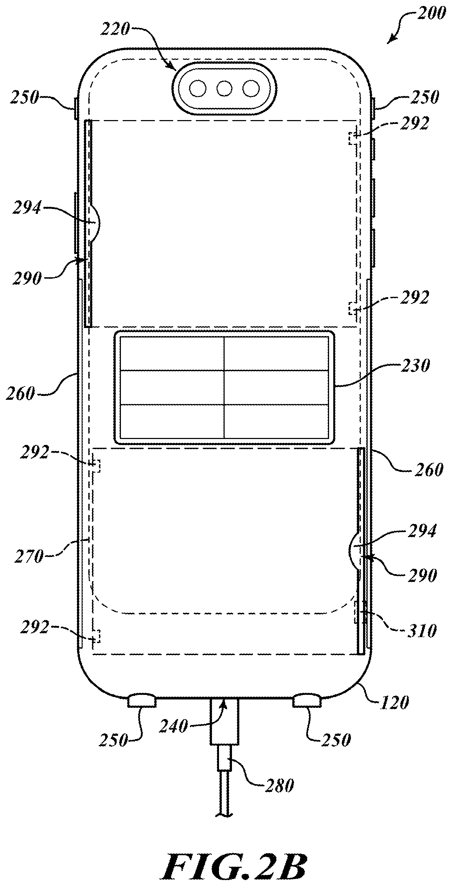

One exemplary acoustic location related algorithms of the present disclosure utilizes the following algorithm to locate the source of the gunshot sound based on the plurality of sound sensors. In one or more implementations, the sound sensors 250 (Figures 2A and 2B) are designed to detect the shock waves or sonic boom of a bullet shot by the gun. A sonic boom is the sound associated with the shock waves created whenever an object (e.g., the bullet) travelling through the air travels faster than the speed of sound (e.g., 340.29 meters per second). The vast amounts of sound energy created by the sonic booms are detected through the sound sensors 250. In other implementations, sound sensors 250 capable of picking up the acoustic characteristics of a muzzle flash can be used. Muzzle flash is the visible light of a muzzle blast, which expels high-temperature, high-pressure gases from the muzzle of a gun. The blast and flash are caused by the combustion products of the gunpowder mixing with air, and the sounds generated during this process can also be used to detect gunshot sounds. The case 120 detects sound data and the mobile device that receives this sound data automatically locates the origin of the sound by using acoustic triangulation. For example, time difference exists between different sensors located in different locations to receive the sound of a gunshot. In addition, by utilizing the GPS/GNSS sensors of individual mobile devices, it is possible to locate the position of the user of the mobile device. The processor of the mobile device can then combine the location based data from the GPS/GNSS sensors with the sound data to triangulate the location of the gunshot. In other embodiments, other type of sound waves, acoustic waves, sonic boom, sub-sonic, and super-sonic waves can be used to determine and triangulate the location of the shooting depending on the type of weapon shot. In one or more embodiments, the sound sensors 250 are designed to pick up frequency ranges (e.g., 5 Hz to 100 kHz) and frequency pattern characteristics that are associated with weapons, gunshots or the like. In analyzing the frequency pattern characteristics, acoustic analysis as well as psychoacoustic analysis of the noise produced by the firearms can be employed. Further, features such as peak levels can also assist in determining the frequency pattern characteristics that are associated with gunshots. For example, a peak level measured for a certain kind of weapon (e.g., pistol) can range between 110 dB to 115 dB. On the other hand, a peak level measured for another kind of weapon (e.g., revolver) can range between 115 dB to 120 dB. Based on these frequency pattern characteristics including, but not limited to, peak level measurements, noise intensity, acoustic analysis, and psychoacoustic analysis, the location of the weapon shot and the type of weapon shot can be determined. Further, by using these analyses, even a gunshot from a weapon having a silencer attached to the weapon can be analyzed because even with the silencer, the specific frequency range and the frequency pattern characteristics can still be determined in a similar manner.

In one or more implementations, the processor of the mobile device can distinguish specific sounds. For example, a memory of the mobile device can store various accumulated gunshot data so that the processor can easily look up from the memory to quickly retrieve data related to the specific gunshot. Generally, a sound of a gunshot has a specific frequency range and the sound pattern of the gunshot frequency spectrum shows a very different frequency spectrum from a bomb explosion, for example. While the specific frequency band and the range of each gunshot sounds differs from the type of the gun (e.g., shot gun, pistol, machine gun, etc.), the sonic boom created or the muzzle blast created is distinct from other sounds and shows a specific sound pattern and a frequency range. Along with these data, the distance information in connection with the intensity or the amplitude of the gunshot sounds are also databased in the memory. In these implementations, the processor may not have to execute a new analysis of the sound data and may retrieve substantially similar sound data from the memory using the look up table. In addition, whenever a new sound data analysis is performed, the relevant sound data associated with that particular gunshot is stored in the memory and shared in the network 150 for future references. In order to consider sound data that are also reflected from objects surrounding the gun shot sound, geographical information may be stored in the memory. For example, guns shot in the middle of a dessert may not have any objects to reflect the sound source. On the contrary, if the gun is shot in the middle of downtown where there are many buildings and vehicles, there may be various kinds of objects having various reflectivity characteristics reflecting the sound source. Accordingly, in some implementations, the memory of the mobile device can also store this information and send the information to the network 150 for database building purposes.

In one or more implementations, the mobile device case 120, 130 are proximal to the location of the gun shooting 110. As shown in Figure 1, the sound sensors 250 arranged in each of the mobile device cases 120, 130 are within a distance or a threshold distance capable of detecting the gunshot. This threshold distance may depend on the type of sound sensors 250 incorporated in each case and the threshold distance for detecting gunshots may differ based on the sound sensors 250. For example, other users may be in the vicinity of the gun shooting but may be beyond the threshold distance capable of picking up the gunshot sound. In one implementation, the sound sensors 250 can have a minimum threshold sound as measured in decibels (dB) that requires the gunshot sound be at least the minimum threshold sound to ensure an accurate zone of location of the gun shooting.

Returning to the situation in Figure 1, the technical problem involved in this gun shooting situation is that even when the people are near the area of the gunshot, it is impossible for the authorities (e.g., police enforcement) to identify the location of the shooting until someone reports the shooting to the authorities. Even if the authorities are notified, due to the emergent situation, these notifications to the general public can take more than a significant amount of time to be posted online or aired through television news. These time consumed during this hour is essential to the life and safety of the people in the vicinity of shooting location. The mobile device case 120, 130 having multiple sound sensors 250 detects sounds associated with gunshots and automatically notifies the location of the gun shooting to the network 150 and other users connected to the network 150. This automatic and immediate solution to the problem provides people with gunshot alerts immediately as it happens so that these people do not find themselves in harm's way. The further details of the function of the mobile device case and the processor of the mobile device will be explained later on.

Figure 2A is a back view 200 of an exemplary mobile device case 120 capable of detecting threat related sounds, according to one illustrated implementation.

The mobile device case 120 includes a logo opening 210, a camera opening 220, a power source 230, a battery charge opening 240, a plurality of sound sensors 250, a light emitting source 260, an inserting slot 290, and a communication device 310. However, other implementations may include fewer or more elements of the mobile device case 120 according to particular design requirements.

A battery charge cord 280 or a mobile device 270 is not part of the mobile device case 120. The battery charge cord 280 and the mobile device 270 are shown to better illustrate the various components and the arrangements in the mobile device case 120.

The mobile device 270 is shown as dotted lines to show the size and shape of the mobile device 270. The components of the case 120 may be rearranged to a different location based on the size and shape of the mobile device 270. For example, for mobile devices having their logos or trademarks at a different position, the logo opening 210 can be positioned in a different location within the mobile device case 120. In other implementations where there is no logo on the back of the mobile device case 120, the logo opening 210 can be omitted from the design of the mobile device case 120. This mobile device 270 may be the mobile device of the bike rider 125 shown in Figure 1.

The camera opening 220 is for the case 120 to not cover the lens of the camera of the mobile device 270. Cameras mounted on the mobile device 270 nowadays includes various image sensors including infrared sensors, time of flight sensors, RGB sensors, beamforming source for producing structured light, or the like, to accommodate various functionalities. In this regard, based on the number of cameras incorporated in the mobile device 270, the number of camera opening 220 can vary based on the number image sensors in the mobile device 270. In this implementation, three image sensors have been shown in the camera opening 220. However, in other implementations, one or more camera opening 220 can be made in the case 120 depending on the design of the mobile device 270.

In some embodiments, communication device 310 or a separate processor in the mobile device case 120 adjacent to the communication device 310, may make sure that the camera of the mobile device 270 as well as other sensors, such as microphone are automatically turned-on. For example, for an auto camera function, the camera can automatically start recording upon the detection of gunshots or that an alarm is activated. The automatically recorded video data may be stored or transmitted to the cloud and provided to a server (e.g., Shepherd Shield command center). The event triggering the automatic wake of the camera can be done by detecting the change of position of the phone/case, detecting the light intensity received to the camera sensor, detecting the change based on gyroscope included in the mobile device, detecting the change based on accelerometer included in the mobile device, or any suitable auto-on feature known in the art. In further embodiments, the microphone in the case 120 and/or the device 270 can automatically start recording the sound upon the detection of gunshots or alarm is activated. The automatically recorded sound data may be transmitted to the cloud and provided to the server (e.g., Shepherd Shield command center) similar to other data detected and recorded.

In one embodiment, the mobile device case 120 is able to turn on the mobile device 270 based on the power source 230 of the case 120. For example, when the phone is intentionally turned-off by the user or the phone is turned-off due to the exhaustion of battery, the power source 230 of the case 120 can feed the battery to the mobile device via an electrical connection port between the case 120 and the phone 270. In this embodiment, even if the phone is turned off during an emergency situation, the phone can be turned on and can notify the user. The electrical connection port can be connected through any interface of the mobile device 270 including the battery connection port. In some cases where the mobile device 270 is remotely charged without direct connection using wires, the case 120 does not include a separate electrical connection port but may include wireless battery charging devices in the case 120. In additional embodiments, the mobile device case 120 having a separate processor can directly notify the network system 150 without having to turn on the mobile device 270. This can be accomplished through the processor and the communication device 310 by using wireless communication scheme such as Wi-Fi, Bluetooth^{®}, cellular or the like. In further embodiments, the case 120 will be able to provide audible and/or visual alerts to signal the user to turn on the phone.

The mobile device case 120 includes a plurality of sound sensors 250. The plurality of sound sensors 250 can be arranged in various locations of the mobile device case 120. The mobile device case 120 can have any number of sensors. In one implementation, each of the sound sensors 250 can be strategically positioned within the mobile device case 120 to be beneficial in obtaining sound data and to extract accurate location information based on the obtained sound data. For example, each of the sound sensors 250 can be spaced apart from each other instead of gathered in or concentrated at a specific location in the mobile device case 120. If the multiple sound sensors 250 are arranged in one location, each of the sound sensors 250 may be receiving substantially identical copies of sound data. On the other hand, if the multiple sound sensors 250 are arranged at different locations within the mobile device case 120, sound data received from said different locations can improve the accuracy of the location based on the received sound data. For example, a total of four sound sensors 250 can be positioned in each side of the case 120. That is, having one sound sensor 250 per side. As mentioned, by dispersing the location where the sound sensor 250 is positioned, it helps to calculate and triangulate the location of the gunshot sound. Having multiple sound sensors 250 in different sides in the mobile device case 120 may be analogous to the effect of having multiple sound sensors 250 at different locations such as the location of the bike rider 125 and the pedestrian 135.

In one or more implementations, the plurality of sound sensors 250 includes microphones or other suitable sound receiving sensors. The sound sensors 250 are electrically coupled to the communication device 310 so that the sound data collected through the sound sensors 250 can be relayed to the mobile device 120 for further processing. As noted above, in at least some implementations the case 120 may only include a single sound sensor 250.

The aforementioned analysis of the sound data is achieved by using the processor of the mobile device 270, a processor of the case 120, or a remotely located processor (e.g., cloud-based server). As explained, the mobile device case 120 can communicate the received sound data from the plurality of sound sensors 250 to the mobile device 270 (e.g., provide the sound data to the processor of the mobile device 270). The mobile device case 120 includes a communication device 310 capable of communicating with the mobile device 270. The communication device 310 assists in relaying the sound data collected from the mobile device case 120 to the processor of the mobile device 270. For example, the communication device 310 can include an integrated circuit (IC) chip capable of communicating using any suitable communication schemes. The mobile device case 120 can be paired, or otherwise coupled by a wired or wireless connection to share data between the mobile device case 120 and the mobile device 270 of the user. The communication schemes can be established through, for example, Bluetooth^{®}, Wi-Fi, Zigbee, NFC (Near-field communication), cellular (e.g., 4G, 5G, etc.) or any suitable wireless connection. That is, the sound sensors 250 mounted on the housing case 120 sense the sound and these sounds or sound data are sent to the processor of the mobile device (or other processor) for further processing using any suitable communication devices 310.

Additionally or alternatively, the mobile device case 120 includes a memory to store the sound data for transmitting them via a wireless connection. In other implementations, the sound data received from the sound sensors 250 are directly coupled to the communication device 310 and sent to the mobile device 270 without being stored in the memory of the mobile device case 120. In further implementations, the sound data received from the sound sensors 250 are coupled to the communication device 310 so that the sound data are sent to the memory of the mobile device 270. In this implementation, a separate memory for the mobile device case 120 will not be required.

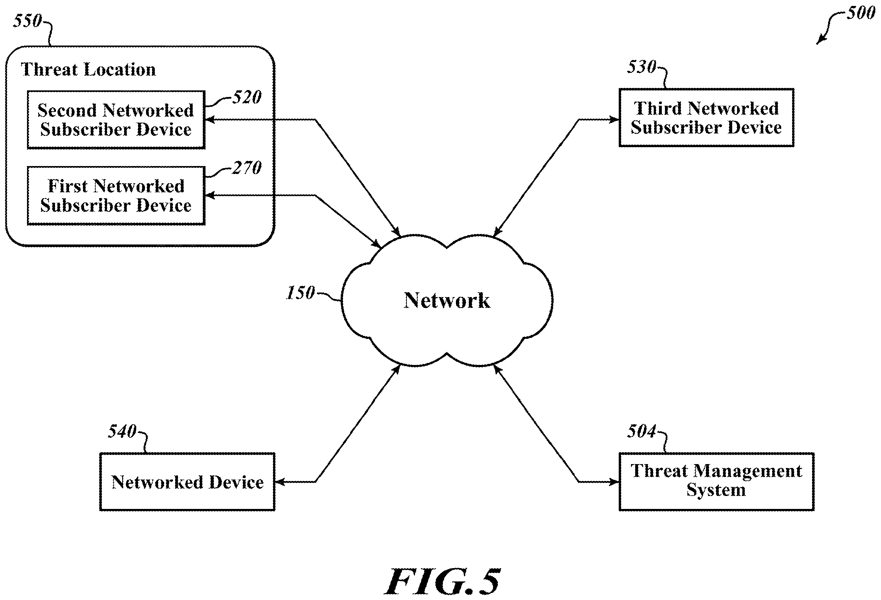

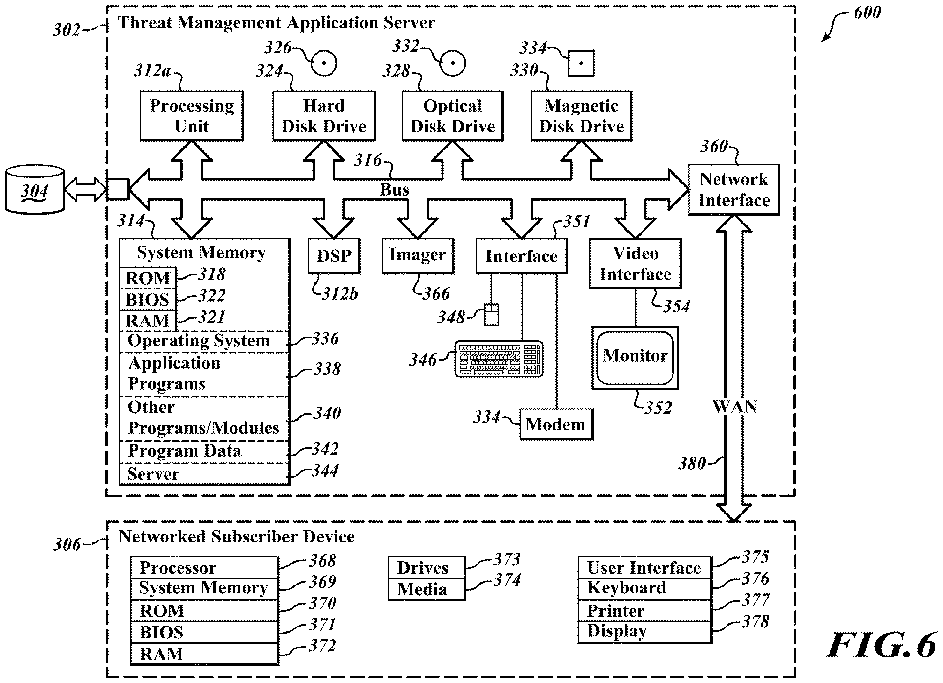

After the sound data transfer between the mobile device case 120 and the respective mobile device 270 is complete, the processor of each mobile device applies the acoustic location related algorithms to analyze the sound data and extract the location of the shooting. As explained, the processor can further use GPS/GNSS signals from the mobile device to get an accurate location of the shooting with respect to the location of the bike rider 125. Once the processor processes the location data of the bike rider 125 and the sound data related to the gun shooter 110, the data is sent to the network 150 so other data from other users (e.g., pedestrian 135) can also be collected. Similarly, the processor of the mobile device of the pedestrian 135 will also go through the same process as mentioned above and will send the processed data to the network 150. The processing and the transmitting from both the mobile device case 120 of the bike rider 125 and the mobile device case 130 of the pedestrian 135 can be done simultaneously or substantially at the same time depending on the time when the gunshot sound is received to each mobile device cases. For example, depending on the location of each user (e.g., how far they are from the gun shooting location) and the speed of sound, the speed of the gunshot sound, the processing and the transmitting of the location data and the sound data can be performed sequentially and will hinge upon when the sound is received to the respective the mobile device cases 120, 130. The above illustrated example in Figure 1 was explained in connection with a gun shooting. However, the application of the mobile device case according to the present disclosure is not confined to gunshot sounds. For example, it can include other threats such as bomb explosions, vehicle collisions, explosions caused by nature (e.g., earthquake, volcano eruption). The various application of the mobile device case 120, 130 will be explained in connection with Figures 5 and 6.

The mobile device case 120 includes a power source 230 separate from the power source in the mobile device 270. The power source 230 is an auxiliary power source to accommodate the power that is consumed by the mobile device case 120, for example, the plurality of sound sensors 250. In one implementation, the power source 230 is a solar power source that is capable of recharging a power source of the case 120. For example, the case 120 can have on its back surface a solar charger. The solar charger can make up for the energy used up in the microphones, LED lights, processor, and the communication device. The power source 230 is electrically coupled using wirings to each of the sound sensors 250, the communication device 310 and the light emitting source 260 to supply power source. The power source 230 can be any other suitable battery type that is being capable of being mounted in or on the case 120. Additionally or alternatively, a thin lithium-ion battery can be used to provide power source. In one or more implementations, the solar charger can be used in conjunction with the lithium-ion battery as the solar charger cannot accumulate energy after the sun sets or in a cloudy day. In one implementation, the solar charger can have a thin film shape charger to reduce the thickness of the mobile device case 120.

In other implementations, the case 120 itself can have a separate rechargeable battery source in the place of or together with the power source 230. The case 120 can be separately charged using a battery charge cord. In some implementations, the case 120 can have a battery port that utilizes the same kind of battery charge cord 280 as the mobile device 270. In such case, the battery charge cord 280 of the mobile device 270 can charge the rechargeable battery source of the mobile device case 120 as well as the mobile device 270. In this implementation, the mobile device case 120 can have further interface connections to connect the battery port of the case 120 with the battery port of the mobile device 270 so the battery charge cord 280 charges simultaneously.

The aforementioned auxiliary power source 230 helps maintain the plurality of sound sensors 250 from operating long hours and prevent the mobile device case 120 from powering off from battery exhaustion. The power source 230 of the mobile device case 120 can also provide as a supplementary power source for the mobile device 270 to ensure that the sound data received can be sent to the processor of the mobile device 270 for further processing. By the mobile device case 120 also acting as a supplementary power source for the mobile device 270, there is a benefit from avoiding any unnecessary power source supply failure.

The mobile device case 120 includes a light emitting source 260. The light emitting source 260 is to alert the user of the threat level by different colors of light. For example, based on the level of threat, the colors emitted from the light emitting source 260 can vary from green to red. That is, the light emitting source 260 can have various colors based on the threat level of the gun shooting event. Based on the proximity of the location, the frequency of the gunshots, for example, a red light for serious threats, an orange light for medium threats, a yellow light for mild threats, a green light for neutralized threats can be emitted. Other various lights and colors can be used to indicate different kind of threats. Additionally, the light emitting source 260 can use the flickering, pulsating, rolling light (e.g., light rolling around the periphery of the phone; in this embodiment, the light emitting source 260 may be also added to the top and bottom of the case, or in a band around a portion or all of the case) or blinking of the light to alert the gravity of the threat. For example, even if the same color of light is emitted, the pattern of the blinking can indicate a different kind of threat within the same color category. If a red light is emitted from the case 120 and the red light blinks very frequently, it may indicate that the threat is not only serious but the blinks with high frequency may indicate the threat location is close. If the red light blinks at a low frequency, it may indicate while the threat is a serious threat (because, for example, multiple gunshots have been fired), the threat location itself could be distant from your location. The notification of threat based on the color of light and the blinking pattern of light is beneficial in that if the threat is serious and the location is close, notifying the user with a sound may attract, for example, the gun shooter 110 to the user. Accordingly, notifying the threat to a user without using sound can be useful and safe. However, when the level of threat as indicated by light is yellow or green, in some implementations, sound alert can also be used by alerting the user with the user's mobile device.

The light emitting source 260 can be located in any suitable location within the mobile device case 120. In Figure 2A, the light emitting source 260 have been illustrated to be on both sides of the case 120. However, in other implementations, there can be light emitting source 260 on one side. It can also be located on the back side or the front side as well depending on the various designs. The light emitting source 260 can include a light emitting diode (LED). However, the light emitting source 260 can be any suitable light source capable of alerting the user when a threat event, such as a gun shooting event occurs.

The inserting slot 290 of the case 120 is capable of holding various personal identification cards, credit cards, transit cards, cash, or any material suitable for fitting in the inserting slot 290. In one embodiment, the inserting slot 290 includes two card sliding slots capable of holding two cards inside (e.g., a driver's license and a credit card). In these cases, the power source 230 can be rearranged to another location to provide a space for various cards to fit in. In another embodiment, the power source 230 can be arranged on the inserting slot 290.

In some embodiments, the inserting slot 290 may be coupled to a spring loaded feature that releases the inserted driver's licenses or credit cards once pressure is applied. For example, the spring loaded feature (not shown in Figure 2A; refer to 292 of Figure 2B) may allow the card inserted in the slot to be pushed down and when pressure is applied again it may be popped out (e.g., 0.25 inch) so the inserted card can be grabbed out easily.

As shown in Figure 2A, the inserting slot 290 may overlap with a portion of the power source 230. For example, the power source 230 can be arranged at the outermost surface of the mobile device case 120. This will be the case when the power source 230 is a solar power source and will be able to have a direct exposure to a solar source (e.g., sun light). In this example, the inserting slot 290 may be arranged below the power source 230 to make space for both components to coincide in the overlapping area.

Figure 2B is a back view of an exemplary mobile device case having a different configuration, according to another illustrated implementation.

As explained, Figure 2B shows a different configuration of a back side of the mobile device case 120. Here, the camera opening 220 is rearranged to the top center portion of the case 120. Based on various designs of mobile devices 270, the camera opening 220 can be arranged differently according to the specific models of the mobile devices.

In this embodiment, the inserting slot 290 can be split in two instead of having a single thicker slot as shown in Figure 2A. In Figure 2A, the mobile device case 120 may have to have a thicker case for accommodating inserting slots 290 for at least two cards (e.g., a driver's license and a credit card) and the power source 230. However, in Figure 2B, by having an upper inserting slot 290 close to the camera opening 220 and a lower inserting slot 290 close to the opening for the battery charge cord 280, the power source 230 does not have to be overlapped with the area of the inserting slots 290.

In this configuration, the power source 230 can have a smaller size to accommodate for the area of the upper and lower inserting slots 290. For example, the power source 230 can be arranged between the upper and lower inserting slots 290.

In one embodiment, the inserting slot 290 includes a spring mechanism 292 and a notch 294. The notch 294 may expose some part of the card inserted in the slot 290. For example, when a user contacts the exposed part of the card shown through the notch 294 and pushes it, the spring mechanism 292 arranged on the other side of the slot 290 can spring forward the inserted card (e.g., pop the inserted card out of the slot). The springing mechanism 292 can also allow the user to lock the card into place in the slot 290 so that the card will not slip out of the inserting slot 290. As explained, by clicking on the notch 294 part of the slot 290, the user can easily pop out the card so that the case 120 can help the user easily insert and easily pop out the card housed in the slot 290. That is, the spring mechanism 292 can have two modes; one for popping out the card from the slot and the other for locking in the card in the slot). In further embodiments, the spring mechanism 292 can have more than two modes to provide easy access and control of the slots 290. The same notch 294 and the spring mechanism 292 may be also included in the example shown in Figure 2A.

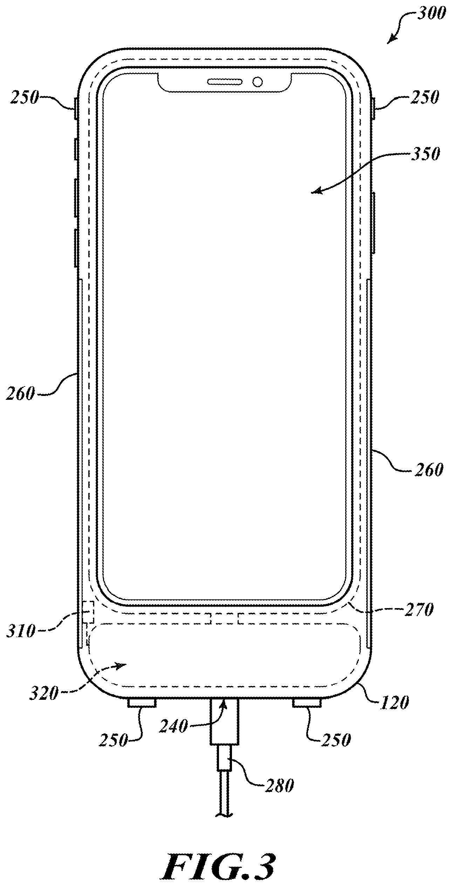

Figure 3 is a front view 300 of the exemplary mobile device case 120 capable of detecting threat related sounds, according to one illustrated implementation.

The front of the mobile device case 120 includes a display opening 350, and a battery space 320. A discussion of other components of the mobile device case 120 that were already detailed in connection with Figures 2A, 2B is omitted for the sake of brevity.

The case 120 includes the display opening 350 so that the display of the mobile device 270 is not covered up. The size and shape of the mobile device 270 may differ based on the various models of the mobile device 270 and the size and shape of the display opening 350 can change accordingly to the design and models of the mobile device 270. In other implementations, the display opening 350 can be a transparent cover that covers up the mobile device 270 but still shows the display of the mobile device 270 by using transparent material for the cover.

The mobile device case 120 includes a battery space 320. The battery space 320 can be used in addition to the power source 230 in the backside of the case 120 or as an alternative to the power source 230. The size and location of the battery space 320 can differ based on the size of the battery that will be placed in the case 120. If a small sized battery is used, for example, a Li-ion battery or lithium polymer battery, the battery space 320 can be downsized so as to not take up much space. In other implementations, the battery space 320 can be omitted as the power source 230 may suffice for providing a power source.

When a battery is mounted in the battery space 320, the battery is electrically coupled using wirings to each of the sound sensors 250, the communication device 310 and the light emitting source 260 to supply power to such components.

Other type of sensors that are not related to sound sensors can also be incorporated into the mobile device case 120. For example, the sensors arranged on the mobile device case 120 can include a smoke detector sensor or a carbon monoxide detector. In this embodiment, the smoke detector sensor will be able to detect smokes from fire, gun smokes from gunshots, odors from biohazardous substances, smokes from explosives, or any other type of smoke or smell indicative of peril or hazard. In some embodiments, both the sound sensors as well as olfactory sensors can be included in the mobile device case 120.

In further embodiments, other suitable sensors may be further included additionally or alternatively to the sound sensors and olfactory sensors. For example, the mobile device case 120 can house impact sensors, accelerometers, or the like. Here, the impact sensors can detect the impact of the collision, for instance, when a car, train, airplane crashes. The impact sensors can have a force sensing feature that can distinguish the force applied to the mobile device case 120 compared to the force applied to the mobile device case 120 by simply dropping the case on the ground. In one embodiment, impact sensors can detect the change in speed or the acceleration of the case in a given interval of time and the force applied to the case in the same interval time to detect collision. The impact sensors can also detect the above collision information in conjunction with a speedometer or an accelerometer. Once an impact is detected, the mobile device case 120 can trigger an alarm to the user of the mobile device 270 by using the communication device 310 in the mobile device case 120. The triggered alarm can also be automatically transmitted to the cloud network 150 like an emergency locator transmitter (ELT) and the collision information may be shared with the other users connected to the network with access authorization (e.g., the collision information may be only shared with families or friends or any predesignated personnel).

In other embodiments, the mobile device case 120 according to the present disclosure may be communicatively connected to other devices besides the mobile device 270. For example, with the communication device 310 included in the mobile device case 120, the case 120 may be able to relay the sound data received from the sensors 250 and transmit to laptops, tablets, watches, etc. via the communication device 310. For instance, a voice/video recognition and processing device such as Amazon's Echo or Ring's video doorbells can be connected to the mobile device case 120 to further receive sound data and notify the users connected to the subscribed network.

In further embodiments, remote sensing devices can be used to detect the gunshots as explained in connection with the mobile device case 120 according to the present disclosure. These remote sensing devices may include, alone or in combination, wireless sensors, door contacts having sensors (e.g., Ring's video doorbells), motion detectors, glass break sensors, pressure switches, smoke detectors to detect gunshots. For instance, a person could be traveling and staying in a hotel, motel, vacation home (e.g., AirBnB, VRBO, etc.) and temporally attach remote sensing devices to doors and set their alarm on the application of the person's mobile device.

In some embodiments, the functionality of the mobile device case 120 may be provided in another type of device, such as a case for another product, or in a product itself (e.g., smartphone, tablet computer, wearable computer, voice assistant device, video doorbell, etc.).

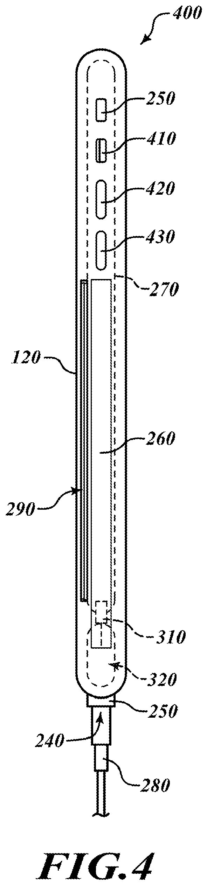

Figure 4 is a side view 400 of the exemplary mobile device case 120 capable of detecting threat related sounds, according to one illustrated implementation. Discussion of other components of the mobile device case 120 that was already detailed in connection with Figures 2A, 2B and 3 is omitted.

One side of the mobile device case 120 includes a button portion on the case 120 so that the various functional buttons of the mobile device 270 can be used on top of the case 120. In other implementations, the button portion can be left as an opening so that the buttons of the mobile device 270 can be directly used by the user. A first button portion 410 may indicate a switch button from changing the mode from a sound mode to a vibration mode or vice versa. A second button portion 420 may indicate a volume button for turning up the volume. A third button portion 430 may indicate a volume button for turning down the volume. Based on the design of the mobile device 270, the location of these buttons can be in a different location, or can be omitted.

The mobile device case 120 shows the battery space 320 in dotted lines. As previously mentioned, the battery space 320 can be omitted in place of the power source 230 in the backside of case 120. By omitting the battery space 320, the case can be further shrunken to substantially match the size of the mobile device 270. Additionally or alternatively, the battery space 320 can protrude from the back of the case 120 so the height of the case 120 is not substantially increased. In this implementation, the thickness of the backside portion of the case 120 corresponding to the battery space 320 may be increased to some degree. However, in different implementations, other suitable components can be incorporated to the case, and the space of the battery space 320 may be used to fit the other components. For example, memory may be attached to the case 120 for temporarily storing the sound data and the battery space 320 can be used in lieu of placing a battery.

In one or more implementations, the mobile device case 120 may incorporate a processor of its own to process the sound data from the sound sensors 250 of the mobile device case 120. In these implementations, the mobile device case 120 will be able to communicate with the server 150 without having to use the processor of the mobile device 270. However, in other implementations, in order to reduce the thickness and weight of the case, the mobile device case 120 may send the sound data to the mobile device 270 and use the processor of the mobile device 270 to obtain the location of the gunfire or other weapons. In further implementations, the aforementioned functionality of the processor can be all integrated into a mobile device case, or all into a mobile device, or any combination thereof.

In one or more embodiments, the outer housing of the mobile device case 120 can have further space, such as the inserting slot 290 for a driver's licenses and credit cards as explained in connection with Figures 2A and 2B. For instance, two slots may be provided on the backside of the case 120 for an identification card (such as a driver's license) and another for a payment method (such as a debit card, credit card, small amount of cash that is folded or the like).

Figure 5 shows a high-level functional block diagram of a threat alert system 500 for alerting a respective user associated with a first networked subscriber device 270. In Figure 1, the first networked subscriber device is, for example, the mobile device 270 of the bike rider 125. Figure 6 shows a corresponding low-level functional block diagram of the threat alert system 500. The threat alert system 500 includes a threat management system 504 and the first networked subscriber device 270. The threat management system 504 communicates with the first networked subscriber device 270 via a network 150. The threat management system 504 causes the first networked subscriber device 270 to emit a humanly perceptible alarm that warns the user 125 of the first networked subscriber device 270 that a target location of the first networked subscriber device 270 coincides with or is in the vicinity of a threat location 550, the location where the gun shooter 110 shot the gun. In one or more implementations, the target location refers to the location of the device. However, in other implementations, the target location may refer to locations other the location of device.

In one or more implementations, a location or a target location may not necessarily point to a specific point of a map. The term "location" or "target location" used herein also includes a range or zone of a geographical location. Accordingly, a "location" may refer to a circular zone having a certain shape and radius. However, the shape and size of the zone is not necessarily confined to a circular shape and may be expressed as a hexagonal shape, a square shape, a rectangle shape, a triangle shape or any kind of shape.

The target location of the first networked subscriber device 270 may include a present location of the first networked subscriber device 270 (*i.e.,* the present location of the bike rider 125 associated with the first networked subscriber device 270). The present location of the first networked subscriber device 270 may be determined from positional data generated by positional tracking logic embedded in the first networked subscriber device 270. The positional tracking logic may include a geodesy system such as GPS, GNSS, Galileo (European) or GLONASS (Russian) logic and wherein the first networked subscriber device 270 receives timing and geodesy information from one or more satellites. Additionally or alternatively, the present location of the first networked subscriber device 270 may be determined from a user checking in to a given location via social media. Additionally or alternatively, the present location of the first networked subscriber device 270 may be determined via radio frequency identification ("RFID") technology or other wireless technologies (e.g., Wi-Fi^{®}), for example. Accordingly, when a present location of the user of the first networked subscriber device 270 coincides with or is in the vicinity of the target location of the first networked subscriber device 270, the threat management system 504 effectively warns the user of the first networked subscriber device 270 that the present location of the user of the first networked subscriber device 270 coincides with or is in the vicinity of the threat location 550. In this manner, the threat management system 504 improves awareness of the user of the first networked subscriber device 270 of surrounding threats that may pose danger to the user of the first networked subscriber device 270.

The threat management system 504 may determine that the threat exists at the threat location 550. The threat management system 504 may make the threat existence determination responsive to obtaining a communication from a given device external to the threat management system 504. The given device external to the threat management system 504 may include a second networked subscriber device 520 operated by a user different from the user of the first networked subscriber device 270 that is present in the threat location 550 or is in the vicinity of the threat location 550. For example, a user operating the second networked subscriber device 520 may the pedestrian 135 shown in Figure 1. Here, the mobile device case 130 housing the pedestrian's 135 mobile device is the second networked subscriber device 520. Additionally or alternatively, the given device external to the threat management system 504 may include a networked device 540 external to the threat management system 504 and the threat location 550. For example, the networked device 540 external to the threat management system 504 may include one or more of the following: a mobile device, a social media server, a news report server, a news broadcast device, a government server, a law enforcement server, a military server, a law enforcement radio scanner, etc. As an additional example, the networked device 540 external to the threat management system 504 may include a non-transitory computer readable medium that stores one or more of the following: a location of a reported crime, a location of a reported criminal, a location of a reported sex offender, a location of a reported terrorist, a location of a reported violent act, a location of a reported gang activity, a location of a reported act of sex solicitation, a location of a reported act of prostitution, a location of a reported act of sex trafficking, a location of a reported drug use, a location of a reported drug sale, a location of a reported drug trafficking, a location of a reported disease outbreak, a location of a reported gunshot, a location of a reported riot, a location of a reported act of police brutality, a location of a reported hate crime, a location of a reported dangerous animal, etc.

As another example, the networked device 540 external to the threat management system 504 may include a non-transitory computer readable medium that stores a location of one or more of the following: a reported impending earthquake, a reported presently active earthquake, a reported impending tornado, a reported presently active tornado, a reported impending hurricane, a reported presently active hurricane, a reported impending flood, a reported presently active flood, a reported impending high tide, a reported presently active high tide, a reported impending abnormal high tide, a reported presently active abnormal high tide, a reported impending low tide, a reported presently active low tide, a reported impending abnormal low tide, a reported presently active abnormal low tide, a reported impending wildfire, a reported presently active wildfire, a reported impending tsunami, a reported presently active tsunami, a reported impending volcanic activity, a reported presently active volcanic activity, a reported geological fault line, a reported impending natural disaster, a reported presently active natural disaster, a reported impending power outage, a reported presently active power outage, a reported impending power shortage, a reported presently active power shortage, a reported impending fuel shortage, a reported presently active fuel shortage, a reported impending fresh water shortage, a reported presently active fresh water shortage, a reported impending food shortage, a reported presently active food shortage, etc.

As a further example, the networked device 540 external to the threat management system 504 may include a non-transitory computer readable medium that stores one or more of the following: crime statistics, theft statistics, vehicle prowling statistics, automobile theft statistics, burglary statistics, murder statistics, at least one sex offense statistics, sex trafficking statistics, prostitution statistics, hate crime statistics, violent crime statistics, non-violent crime statistics, piracy statistics, drug trafficking statistics, drug sale statistics, drug use statistics, gang activity statistics, gang member statistics, injunction statistics, sex offender statistics, criminal statistics, police brutality statistics, corrupt politician statistics, unemployment statistics, education statistics, per capita income statistics, household income statistics, disease statistics, life-threatening disease statistics, vehicle accident statistics, terrorist activity statistics, outstanding warrant statistics, dangerous animal statistics, riot statistics, earthquake statistics, tornado statistics, hurricane statistics, flood statistics, high tide statistics, low tide statistics, wildfire statistics, tsunami statistics, volcanic activity statistics, natural disaster statistics, power outage statistics, fuel shortage statistics, power shortage statistics, fresh water shortage statistics, food shortage statistics, etc.

The obtained communication from the given device external to the threat management system 504 may include a threat report signal. For example, a witness of the threat at the threat location 550 may report the threat to or via the given device external to the threat management system 504. As another example, an entity with knowledge of the threat at the threat location 550 may report the threat to or via the given device external to the threat management system 504. As a further example, responsive to a sensor that senses the threat at the threat location 550, the given device external to the threat management system 504 may report the threat. Accordingly, the threat management system 504 obtains a record of the threat at the threat location 550. In this manner, the threat management system 504 improves awareness of the user of the first networked subscriber device 270 of reportedly posed danger at the threat location 550.

Additionally or alternatively, the obtained communication from the given device external to the threat management system 504 may include a threat assessment data signal. Responsive to the threat assessment data signal, the threat management system 504 may generate a threat assessment score. The threat assessment score may include a value type of one or more of the following: a color, a number, text, an image, a graphic, a symbol, a shape, a graph, a diagram, etc. Additionally or alternatively, the threat assessment data signal may include the threat assessment score. Accordingly, the threat management system 504 obtains a record of threat propensity at the threat location 550. In this manner, the threat management system 504 improves awareness of the user of the first networked subscriber device 270 of typical posed danger at the threat location 550.

The threat location 550 includes a location of a threat. The threat may include a temporary threat. The temporary threat may include a presently active temporary threat at the threat location 550. For example, the presently active temporary threat may include a presently active shooter of a weapon at the threat location 550. As another example, the presently active temporary threat may include a presently active tornado at the threat location 550. As additional examples, the presently active temporary threat may include one or more of the following: a presently active crime, a presently active sex offense, a presently active act of terrorism, a presently active violent act, a presently active gang activity, presently active sex solicitation, presently active prostitution, presently active sex trafficking, presently active drug use, presently active drug sale, presently active drug trafficking, a presently active disease outbreak, a presently active gunshot, a presently active riot, a presently active act of police brutality, a presently active hate crime, a presently active dangerous animal, a presently active earthquake, a presently active tornado, a presently active hurricane, a presently active flood, a presently active high tide, a presently active low tide, a presently active wildfire, a presently active tsunami, presently active volcanic activity, a presently active natural disaster, a presently active power outage, a presently active power shortage, a presently active fuel shortage, a presently active fresh water shortage, a presently active food shortage, etc. Accordingly, the threat management system 504 warns the user of the first networked subscriber device 270 that the target location of the first networked subscriber device 270 coincides with or is in the vicinity of the threat location 550 of the presently active temporary threat. In this manner, the threat management system 504 improves the likelihood that the user of the first networked subscriber device 270 avoids or escapes posed danger of the presently active temporary threat.

Additionally or alternatively, the temporary threat may include an imminent temporary threat. The imminent temporary threat may include a presently inactive temporary threat at the threat location 550. For example, the imminent temporary threat may include a forecasted hurricane at the threat location 550. As another example, the imminent temporary threat may include one or more of the following: an imminent disease outbreak, an imminent riot, an imminent earthquake, an imminent tornado, an imminent hurricane, an imminent flood, an imminent high tide, an imminent low tide, an imminent wildfire, an imminent tsunami, imminent volcanic activity, an imminent natural disaster, an imminent power outage, an imminent power shortage, an imminent active fuel shortage, an imminent fresh water shortage, an imminent food shortage, etc. Additionally or alternatively, the imminent temporary threat may include a presently active temporary threat outside of the threat location 550 and presently approaching the threat location 550. For example, the imminent temporary threat may include a high-speed vehicle chase that includes a fleeing vehicle that drives toward the threat location 550.

Accordingly, the threat management system 504 warns the user of the first networked subscriber device 270 that the target location of the first networked subscriber device 270 coincides with or is in the vicinity of the threat location 550 of the imminent temporary threat. In this manner, the threat management system 504 improves the likelihood that the user of the first networked subscriber device 270 prepares for or avoids posed danger of the imminent temporary threat or has sufficient time to assist others at the threat location 550.

Additionally or alternatively, the threat may include a permanent or semi-permanent threat. For example, the permanent or semi-permanent threat may include a registered sex offender. As another example, the permanent or semi-permanent threat may include a known violent gang. As additional examples, the permanent or semi-permanent threat may include one or more of the following: a high crime rate, a high violence rate, a high rate of gang activity, a high rate of sexual solicitation, a high rate of sex trafficking, a high rate of drug use, a high rate of drug sales, a high rate of drug trafficking, a high rate of disease outbreak, a high rate of gunshots, a high rate of riots, a high rate of police brutality, a high rate of hate crimes, a high rate of dangerous animal encounters, a high rate of earthquakes, a high rate of tornados, a high rate of hurricanes, a high rate of floods, a high rate of high tides, a high rate of low tides, a high rate of wildfires, a high rate of tsunamis, a high rate of volcanic activity, a geological fault line, a high rate of natural disasters, a high rate of power outages, a high rate of power shortage, a high rate of fuel shortages, a high rate of fresh water shortages, a high rate of food shortage, a high rate of theft, a high rate of vehicle prowling, a high rate of automobile theft, a high rate of burglary, a high rate of murder, a high rate of sex offenses, a high rate of prostitution, a high rate of non-violent crime, a high rate of piracy, a high rate of gang members, a high rate of injunctions against gangs, a high rate of injunctions against individuals, a high rate of terrorist activity, a high rate of outstanding warrants, a high rate of sex offenders, a high rate of criminals, a high rate of car accidents a high rate of police brutality, a high rate of injunctions against police, a high rate of corrupt politicians, a high rate of unemployment, a high rate of low education, a high rate of low per capita income, a high rate of low household income, a high rate of disease, a high rate of life-threatening disease, etc. Additionally or alternatively, the permanent or semi-permanent threat may include one or more of the immediately above explained examples when a severity level of the threat is sufficiently high, even when the rate of the threat is low. Accordingly, the threat management system 504 warns the user of the first networked subscriber device 270 that the target location of the first networked subscriber device 270 coincides with or is in the vicinity of the threat location 550 of the permanent or semi-permanent threat. In this manner, the threat management system 504 improves the likelihood that the user of the first networked subscriber device 270 prepares for or avoids the permanent or semi-permanent threat or takes action to improve a condition of the threat location 550.

In addition or alternative to the first networked subscriber device 270, the alert system 500 may include a third networked subscriber device 530. The third networked subscriber device 530 may be a separate mobile device of a third user that is not shown in Figure 1. The third user may be significantly away from the threat location 550. However, the third user could be on its way towards the threat location 550 or could have designated the geographical location corresponding to the threat location 550 as a place or interest or a region of interest. The threat management system 504 communicates with the third networked subscriber device 530 via the network 150. As shown in Figure 3 and Figure 4, the threat management system 504 causes the third networked subscriber device 530 to emit a humanly perceptible alarm that warns a user of the third networked subscriber device 530 that a target location of the third networked subscriber device 530 coincides with or is in the vicinity of the threat location 550.

The target location of the third networked subscriber device 530 may include a present location of the third networked subscriber device 530. Accordingly, when a present location of the user of the third networked subscriber device 530 coincides with or is in the vicinity of the target location of the third networked subscriber device 530, the threat management system 504 effectively warns the user of the third networked subscriber device 530 that the present location of the user of the third networked subscriber device 530 coincides with or is in the vicinity of the threat location 550. In this manner, the threat management system 504 permits the user of the third networked subscriber device 530 to monitor threats that may pose danger to the user of the third networked subscriber device 530.

Additionally or alternatively, the target location of the third networked subscriber device 530 is different from the threat location 550 and different from the present location of the first and second networked subscriber devices 270, 520. In this manner, the threat management system 504 permits the user of the third networked subscriber device 530 to monitor threats that may pose danger to remotely located property or a loved one at a known location.

Additionally or alternatively, the target location of the third networked subscriber device 530 may include a user selected or defined travel path from a start position to a destination. The start position of the user selected or defined travel path may include the present location of the third networked subscriber device 530. Additionally or alternatively, the start position of the user selected or defined travel path may include the present location of the first networked subscriber device 270. Additionally or alternatively, the start position of the user selected or defined travel path may include a user selected or defined start position. The destination of the user selected or defined travel path may include a user selected or defined destination. Accordingly, the threat management system 504 warns the user of the third networked subscriber device 530 when the user selected or defined travel path coincides with or is in the vicinity of the threat location 550. In this manner, the threat management system 504 improves awareness of the user of the third networked subscriber device 530 of posed dangers in, along, adjacent, or near the user selected or defined travel path, including paths commonly traversed by the user (e.g., commute, errands, vacation spots).

In addition or alternative to the humanly perceptible alarm that warns the user of the third networked subscriber device 530 that the target location of the third networked subscriber device 530 coincides with or is in the vicinity of the threat location 550, the threat management system 504 may cause the third networked subscriber device 530 to notify the user of the third networked subscriber device 530 of a threat characteristic of the threat at the threat location 550. The threat management system 504 may determine the threat characteristic. Additionally or alternatively, the threat management system 504 may calculate the threat characteristic. Additionally or alternatively, the threat management system 504 may generate the threat characteristic. Additionally or alternatively, the threat management system 504 may create the threat characteristic. Additionally or alternatively, the threat management system 504 may obtain the threat characteristic.

The threat characteristic may include a particular threat type of the threat at the threat location 550. For example, the threat management system 504 may cause the third networked subscriber device 530 to notify the user of the third networked subscriber device 530 that the threat at the threat location 550 is a temporary threat. As another example, the threat management system 504 may cause the third networked subscriber device 530 to notify the user of the third networked subscriber device 530 that the threat at the threat location 550 is a presently active temporary threat. As a further example, the threat management system 504 may cause the third networked subscriber device 530 to notify the user of the third networked subscriber device 530 that the threat at the threat location 550 is a presently active shooter of a weapon. In this manner, the threat management system 504 notifies the user of the third networked subscriber device 530 to be aware of the particular threat type, thereby improving the speed user of the third networked subscriber device 530 in terms of determining or recognizing subsequent acts. In one or more implementations, the threat management system 504 alerts the first and second networked subscriber devices 270, 520 who are in the vicinity of the threat location 550 as well.

Additionally or alternatively, the threat characteristic may include a threat level of the threat at the threat location 550. The threat level may indicate a level of threat seriousness. Additionally or alternatively, the threat level may indicate a level of threat danger. The threat level may vary responsive to distance between the target location of the third networked subscriber device 530 and the threat at the threat location 550. Additionally or alternatively, the threat level may vary responsive to time until the threat at the threat location 550 becomes a presently active threat. Additionally or alternatively, the threat level may vary responsive to expected remaining existence duration of the threat at the threat location 550. Additionally or alternatively, the threat level may vary responsive to a level of preparedness of the threat location 550 for the threat at the threat location 550. Additionally or alternatively, the threat level may vary responsive to number of reports of the threat at the threat location 550. Additionally or alternatively, the threat level may vary responsive to whether the threat at the threat location 550 includes a rare event. Additionally or alternatively, the threat level may vary responsive to velocity of the threat at the threat location 550. Additionally or alternatively, the threat level may vary responsive to velocity of the target location of the third networked subscriber device 530. Additionally or alternatively, the threat level may vary responsive to acceleration of the threat at the threat location 550. Additionally or alternatively, the threat level may vary responsive to acceleration of the target location of the third networked subscriber device 530. Additionally or alternatively, the threat level may vary responsive to each user's particular comfort level, as expressed by the user or as detected by the threat management system 504.

Additionally or alternatively, a dimension of the target location of the third networked subscriber device 530 may vary responsive to the threat characteristic. Additionally or alternatively, a dimension of the threat location 550 may vary responsive to the threat characteristic. Accordingly, the threat management system 504 warns the user of the third networked subscriber device 530 only responsive to the threat at the threat location 550 being of situational significance to the user of the third networked subscriber device 530. In this manner, the threat management system 504 improves the likelihood that the user of the third networked subscriber device 530 seriously considers the threat at the threat location 550.

In addition or alternative to the first networked subscriber device 270, the alert system 500 may include a third networked subscriber device 530. The threat management system 504 communicates with the third networked subscriber device 530 via the network 150. The threat management system 504 causes the third networked subscriber device 530 to emit a humanly perceptible alarm that warns a user of the third networked subscriber device 530 that a target location of the third networked subscriber device 530 coincides with or is in the vicinity of the threat location 550. Same humanly perceptible alarm will be provided to the first and second networked subscriber devices 270, 520 as well.

The target location of the third networked subscriber device 530 may include a present location of the third networked subscriber device 530. Accordingly, when a present location of the user of the third networked subscriber device 530 coincides with or is in the vicinity of the target location of the third networked subscriber device 530, the threat management system 504 effectively warns the user of the third networked subscriber device 530 that the present location of the user of the third networked subscriber device 530 coincides with or is in the vicinity of the threat location 550. In this manner, the threat management system 504 permits the user of the third networked subscriber device 530 to monitor threats that may pose danger to the user of the third networked subscriber device 530.

Additionally or alternatively, the target location of the third networked subscriber device 530 may include a user selected or defined travel path from a start position to a destination. The start position of the user selected or defined travel path may include the present location of the third networked subscriber device 530. Additionally or alternatively, the start position of the user selected or defined travel path may include the present location of the first networked subscriber device 270. Additionally or alternatively, the start position of the user selected or defined travel path may include a user selected or defined start position. The destination of the user selected or defined travel path may include a user selected or defined destination. Accordingly, the threat management system 504 warns the user of the third networked subscriber device 530 when the user selected or defined travel path coincides with or is in the vicinity of the threat location 550. In this manner, the threat management system 504 improves awareness of the user of the third networked subscriber device 530 of posed dangers in, along, adjacent, or near the user selected or defined travel path, including paths commonly traversed by the user (e.g., commute, errands, vacation spots).

In addition or alternative to the humanly perceptible alarm that warns the user of the third networked subscriber device 530 that the target location of the third networked subscriber device 530 coincides with or is in the vicinity of the threat location 550, the threat management system 504 may cause the third networked subscriber device 530 to notify the user of the third networked subscriber device 530 of a threat characteristic of the threat at the threat location 550. The threat management system 504 may determine the threat characteristic. Additionally or alternatively, the threat management system 504 may calculate the threat characteristic. Additionally or alternatively, the threat management system 504 may generate the threat characteristic. Additionally or alternatively, the threat management system 504 may create the threat characteristic. Additionally or alternatively, the threat management system 504 may obtain the threat characteristic.

The threat characteristic may include a particular threat type of the threat at the threat location 550. For example, the threat management system 504 may cause the third networked subscriber device 530 to notify the user of the third networked subscriber device 530 that the threat at the threat location 550 is a temporary threat. As another example, the threat management system 504 may cause the third networked subscriber device 530 to notify the user of the third networked subscriber device 530 that the threat at the threat location 550 is a presently active temporary threat. As a further example, the threat management system 504 may cause the third networked subscriber device 530 to notify the user of the third networked subscriber device 530 that the threat at the threat location 550 is a presently active shooter of a weapon. In this manner, the threat management system 504 notifies the user of the third networked subscriber device 530 to be aware of the particular threat type, thereby improving the speed user of the third networked subscriber device 530 in terms of determining or recognizing subsequent acts.

Additionally or alternatively, the threat characteristic may include a threat level of the threat at the threat location 550. The threat level may indicate a level of threat seriousness. Additionally or alternatively, the threat level may indicate a level of threat danger. The threat level may vary responsive to distance between the target location of the third networked subscriber device 530 and the threat at the threat location 550. Additionally or alternatively, the threat level may vary responsive to time until the threat at the threat location 550 becomes a presently active threat. Additionally or alternatively, the threat level may vary responsive to expected remaining existence duration of the threat at the threat location 550. Additionally or alternatively, the threat level may vary responsive to a level of preparedness of the threat location 550 for the threat at the threat location 550. Additionally or alternatively, the threat level may vary responsive to number of reports of the threat at the threat location 550. Additionally or alternatively, the threat level may vary responsive to whether the threat at the threat location 550 includes a rare event. Additionally or alternatively, the threat level may vary responsive to velocity of the threat at the threat location 550. Additionally or alternatively, the threat level may vary responsive to velocity of the target location of the third networked subscriber device 530. Additionally or alternatively, the threat level may vary responsive to acceleration of the threat at the threat location 550. Additionally or alternatively, the threat level may vary responsive to acceleration of the target location of the third networked subscriber device 530. Additionally or alternatively, the threat level may vary responsive to each user's particular comfort level, as expressed by the user or as detected by the threat management system 504.

Additionally or alternatively, a dimension of the target location of the third networked subscriber device 530 may vary responsive to the threat characteristic. Additionally or alternatively, a dimension of the threat location 550 may vary responsive to the threat characteristic. Accordingly, the threat management system 504 warns the user of the third networked subscriber device 530 only responsive to the threat at the threat location 550 being of situational significance to the user of the third networked subscriber device 530. In this manner, the threat management system 504 improves the likelihood that the user of the third networked subscriber device 530 seriously considers the threat at the threat location 550.

The threat management system 504 may permit the third networked subscriber device 530 to subscribe to one or more particular threat characteristics. The user of the third networked subscriber device 530 may select a particular threat characteristic for subscription by interacting with a threat characteristic interface of the third networked subscriber device 530. Additionally or alternatively, the user of the third networked subscriber device 530 may define the particular threat characteristic for subscription by interacting with the threat characteristic interface of the third networked subscriber device 530. The threat characteristic interface of the third networked subscriber device 530 may include one or more of a slide bar, a checkbox, a menu, a button, a dialog box, etc., for example. As an example, the threat management system 504 may cause the third networked subscriber device 530 to emit the humanly perceptible alarm that warns the user of the third networked subscriber device 530 that the target location of the third networked subscriber device 530 coincides with or is in the vicinity of the threat location 550 only responsive to the threat characteristic of the threat at the threat location 550 matching the user selected or defined threat characteristic. As another example, the threat management system 504 may cause the third networked subscriber device 530 to emit the humanly perceptible alarm that warns the user of the third networked subscriber device 530 that the target location of the third networked subscriber device 530 coincides with or is in the vicinity of the threat location 550 only responsive to the threat characteristic of the threat at the threat location 550 falling within a range of the user selected or defined threat characteristic. As a further example, the threat management system 504 may cause the third networked subscriber device 530 to emit the humanly perceptible alarm that warns the user of the third networked subscriber device 530 that the target location of the third networked subscriber device 530 coincides with or is in the vicinity of the threat location 550 only responsive to the threat characteristic of the threat at the threat location 550 exceeding the user selected or defined threat characteristic. Accordingly, the threat management system 504 warns the user of the third networked subscriber device 530 only responsive to the threat at the threat location 550 being of interest or concern to the user of the third networked subscriber device 530. In this manner, the threat management system 504 improves the likelihood that the user of the third networked subscriber device 530 seriously considers the threat at the threat location 550.

Additionally or alternatively, the humanly perceptible alarm that warns the user of the third networked subscriber device 530 may include a haptic alarm. Additionally or alternatively, the humanly perceptible alarm that warns the user of the third networked subscriber device 530 may include an audible alarm. Additionally or alternatively, the user of the third networked subscriber device 530 may choose whether the humanly perceptible alarm that warns the user of the third networked subscriber device 530 includes a particular combination of visual, haptic, or audible alarms. Additionally or alternatively, whether the humanly perceptible alarm that warns the user of the third networked subscriber device 530 includes a particular combination of visual, haptic, or audible alarms varies responsive to the threat characteristic of the threat at the threat location 550. For example, the threat characteristic of the threat at the threat location 550 may indicate that a visual or audible alarm may attract unwanted attention to the third networked subscriber device 530. As another example, the threat characteristic of the threat at the threat location 550 may indicate that an audible or haptic alarm may not sufficiently warn the user of the third networked subscriber device 530. As a further example, the threat characteristic of the threat at the threat location 550 may indicate that the user of the third networked subscriber device 530 may not perceive a visual or haptic alarm. Accordingly, the threat management system 504 may cause the third networked subscriber device 530 to emit the humanly perceptible alarm that warns the user of the third networked subscriber device 530 that most appropriately warns the user of the third networked subscriber device 530 that the target location of the third networked subscriber device 530 coincides with or is in the vicinity of the threat location 550. In this manner, the threat management system 504 increases the likelihood that user becomes aware or safely aware of the threat at the threat location 550. The aforementioned humanly perceptible alarm will be available to the first and second networked subscriber device 270, 520 as well.

Additionally or alternatively, the humanly perceptible alarm that warns the user of the third networked subscriber device 530 may notify the user of the third networked subscriber device 530 of the threat characteristic of the threat at the threat location 550. For example, an intensity of the humanly perceptible alarm that warns the user of the third networked subscriber device 530 may vary responsive to the threat characteristic. As another example, a pattern of the humanly perceptible alarm that warns the user of the third networked subscriber device 530 may vary responsive to the threat characteristic. As a further example, a color of the humanly perceptible alarm that warns the user of the third networked subscriber device 530 may vary responsive to the threat characteristic. As an additional example, a graphic of the humanly perceptible alarm that warns the user of the third networked subscriber device 530 may vary responsive to the threat characteristic. As yet another example, a sound of the humanly perceptible alarm that warns the user of the third networked subscriber device 530 may vary responsive to the threat characteristic. As yet a further example, text of the humanly perceptible alarm that warns the user of the third networked subscriber device 530 may vary responsive to the threat characteristic.

Figure 6 shows an exemplary alert system 600 comprising one or more threat management application servers 302 (only one illustrated) and one or more networked devices 304 external to the threat management application server 302 (only one illustrated). For example, the threat management application server 302 may be a component of the threat management system 504 of Figure 5. Additionally or alternatively, the threat management application server 302 may be a component of the network 150 of Figures 1 and 5. Also for example, the networked device 304 external to the threat management application server 302 may be representative of the networked device 540 external to the threat management system 504 of Figure 1. The networked device 304 is communicatively coupled to the threat management application server 302 via one or more communications channels, for example, one or more parallel cables, serial cables, or wireless channels capable of high speed communications, for instance, via FireWire^{®}, Universal Serial Bus^{®} (USB) 2 or 3, Thunderbolt^{®}, Gigabyte Ethernet^{®} or any other suitable communication channels.

The alert system 600 also includes one or more networked subscriber devices 306 (only one illustrated). For example, the networked subscriber device 306 may be representative of the first networked subscriber device 270, the second networked subscriber device 520, the third networked subscriber device 530 of Figure 5, or any of the numerous (e.g., millions) networked subscriber devices which may be used with the alert system 600. The networked subscriber devices 306 are communicatively coupled to the threat management application server(s) 302 by one or more communications channels, for example, one or more wide area networks (WANs) 380, for instance the Internet or Worldwide Web portion thereof.

In operation, the networked subscriber devices 306 typically function as a client to the threat management application server 302. In operation, the threat management application server 302 typically functions as a server to receive requests or information from the networked subscriber devices 306.

In one or more implementations, the networked subscriber device 306 includes some or all of the functionality of the mobile device case (as shown as 120, 130 in Figure 1), or some or all of the functionality of the mobile device (as shown as 270, 520, 530, 706 in Figures 2-12) or the processor of the mobile device (270, 520, 530, 706).

The alert system 600 may employ other computer systems and network equipment, for example, additional servers, proxy servers, firewalls, routers and/or bridges. The threat management application servers 302 will at times be referred to in the singular herein, but this is not intended to limit the implementations to a single device since in typical implementations there may be more than one threat management application server 302 involved.

The threat management application servers 302 may include one or more processing units 312a, 312b (collectively 312), a system memory 314 and a system bus 316 that couples various system components, including the system memory 314 to the processing units 312. The processing units 312 may be any logic processing unit, such as one or more central processing units (CPUs) 312a, digital signal processors (DSPs) 312b, application-specific integrated circuits (ASICs), field programmable gate arrays (FPGAs), etc. The system bus 316 can employ any known bus structures or architectures, including a memory bus with memory controller, a peripheral bus, and/or a local bus. The system memory 314 includes read-only memory ("ROM") 318 and random access memory ("RAM") 321. A basic input/output system ("BIOS") 322, which can form part of the ROM 318, contains basic routines that help transfer information between elements within the threat management application server(s) 302, such as during start-up.

The threat management application servers 302 may include a hard disk drive 324 for reading from and writing to a hard disk 326, an optical disk drive 328 for reading from and writing to removable optical disks 332, and/or a magnetic disk drive 330 for reading from and writing to magnetic disks 334. The optical disk 332 can be a CD-ROM, while the magnetic disk 334 can be a magnetic floppy disk or diskette. The hard disk drive 324, optical disk drive 328 and magnetic disk drive 330 may communicate with the processing unit 312 via the system bus 316. The hard disk drive 324, optical disk drive 328 and magnetic disk drive 330 may include interfaces or controllers (not shown) coupled between such drives and the system bus 316, as is known by those skilled in the relevant art. The drives 324, 328 and 330, and their associated computer-readable media 326, 332, 334, provide nonvolatile storage of computer-readable instructions, data structures, program modules and other data for the threat management application server 302. Although the depicted threat management application server 302 is illustrated employing a hard disk 324, optical disk 328 and magnetic disk 330, those skilled in the relevant art will appreciate that other types of computer-readable media that can store data accessible by a computer may be employed, such as WORM drives, RAID drives, magnetic cassettes, flash memory cards, digital video disks ("DVD"), Bernoulli cartridges, RAMs, ROMs, smart cards, etc.

Program modules can be stored in the system memory 314, such as an operating system 336, one or more application programs 338, other programs or modules 340 and program data 342. The system memory 314 may also include communications programs, for example, a server 344 that causes the threat management application server 302 to serve electronic information or files via the Internet, intranets, extranets, telecommunications networks, or other networks as described below via a network connectivity device such as network interface 360. The server 344 in the depicted implementation is markup language based, such as Hypertext Markup Language (HTML), Extensible Markup Language (XML) or Wireless Markup Language (WML), and operates with markup languages that use syntactically delimited characters added to the data of a document to represent the structure of the document. A number of suitable servers that may be specifically programmed to operate, act, perform, function, or achieve as a special purpose computer that operates, acts, performs, functions, or achieves any result(s) explained herein with regard to, for example, any combination of the first networked subscriber device 270, the second networked subscriber device 520, the third networked subscriber device 530, the networked device 112 external to the threat management system 504, the threat management system 504, etc. may be commercially available such as those from entities such as Mozilla, Google, Microsoft and Apple Computer.

While shown in Figure 6 as being stored in the system memory 314, the operating system 336, application programs 338, other programs/modules 340, program data 342 and server 344 can be stored on the hard disk 326 of the hard disk drive 324, the optical disk 332 of the optical disk drive 328 and/or the magnetic disk 334 of the magnetic disk drive 330.

An operator can enter commands and information into the threat management application server(s) 302 through input devices such as a touch screen or keyboard 346 and/or a pointing device such as a mouse 348, and/or via a graphical user interface. Other input devices can include a microphone, joystick, game pad, tablet, scanner, etc. These and other input devices are connected to one or more of the processing units 312 through an interface 351 such as a serial port interface that couples to the system bus 316, although other interfaces such as a parallel port, a game port or a wireless interface or a universal serial bus ("USB") can be used. A monitor 352 or other display device is coupled to the system bus 316 via a video interface 354, such as a video adapter. The threat management application server(s) 302 can include other output devices, such as speakers, printers, etc.

The threat management application servers 302 can operate in the alert system 600 using logical connections to one or more remote computers and/or devices. For example, the threat management application servers 302 can operate in the alert system 600 using logical connections to one or more networked subscriber devices 306. Communications may be via a wired and/or wireless network architecture, for instance, wired and wireless enterprise-wide computer networks, intranets, extranets, and/or the Internet. Other implementations may include other types of communications networks including telecommunications networks, cellular networks, paging networks, and other mobile networks. There may be any variety of computers, switching devices, routers, bridges, firewalls and other devices in the communications paths between the threat management application servers 302, the networked subscriber devices 306.

The networked subscriber devices 306 will typically take the form of specifically programmed end user processor-based devices, for instance, personal computers (e.g., desktop or laptop computers), net book computers, tablet computers, smart phones, personal digital assistants, vehicle head units, wearable computers, workstation computers and/or mainframe computers, and the like, executing appropriate instructions that specifically program the networked subscriber devices 306 to operate, act, perform, function, or achieve as a special purpose computer that operates, acts, performs, functions, or achieves any result(s) explained herein with regard to, for example, one or more of the first networked subscriber device 270, the second networked subscriber device 520, the third networked subscriber device 530, the networked device 112 external to the threat management system 504, the threat management system 504, etc. These networked subscriber devices 306 may be communicatively coupled to one or more server computers. For instance, networked subscriber devices 306 may be communicatively coupled externally via one or more end user client entity server computers (not shown), which may implement a firewall. The threat management application servers 302 may execute a set of server instructions that specifically program the threat management application servers 302 to operate, act, perform, achieve, or function as a special purpose computer that is specifically programmed to operate, act, perform, function, or achieve as a special purpose computer that operates, acts, performs, functions, or achieves any result(s) explained herein with regard to, for example, one or more of the first networked subscriber device 270, the second networked subscriber device 520, the third networked subscriber device 530, the networked device 112 external to the threat management system 504, the threat management system 504, etc. The threat management application servers 302 may execute a set of server instructions to function as a special purpose server for a number of networked subscriber devices 306 (e.g., clients) communicatively coupled via a LAN at a facility or site that act as intermediaries between the networked subscriber devices 306 and the threat management application server(s) 302. The networked subscriber devices 306 may execute a set of client instructions that specifically program the networked subscriber devices 306 to operate, act, perform, function, or achieve as a special purpose client of the threat management application servers(s) 302, which are communicatively coupled via a WAN.

The networked subscriber devices 306 may include one or more processing units 368, system memories 369 and a system bus (not shown) that couples various system components including the system memory 369 to the processing unit 368. The networked subscriber devices 306 will at times each be referred to in the singular herein, but this is not intended to limit the implementations to a single networked subscriber device 306. In typical implementations, there may be more than one networked subscriber device 306 and there will likely be a large number of networked subscriber devices 306.

The processing unit 368 may be any specifically programmed logic processing unit, such as one or more central processing units (CPUs), digital signal processors (DSPs), application-specific integrated circuits (ASICs), field programmable gate arrays (FPGAs), graphical processing units (GPUs), etc. Non-limiting examples of commercially available computer systems that may be specifically programmed to operate, act, perform, function, or achieve as a special purpose computer that operates, acts, performs, functions, or achieves any result(s) explained herein with regard to, for example, one or more of the first networked subscriber device 270, the second networked subscriber device 520, the third networked subscriber device 530, the networked device 112 external to the threat management system 504, the threat management system 504, etc. include, but are not limited to, an 80x86 or Pentium series microprocessor from Intel Corporation, U.S.A., a PowerPC microprocessor from IBM, a Sparc microprocessor from Sun Microsystems, Inc., a PA-RISC series microprocessor from Hewlett-Packard Company, a 68xxx series microprocessor from Motorola Corporation, an ATOM processor, a Snapdragon processor from Qualcomm, an Exynos processor from Samsung, or an Ax processor from Apple.

In one or more implementations, the processing unit 368 or the processor calculates and determines the location data based on the sound data received from the plurality of sound sensors 250 and the GPS/GNSS signals.

The system bus can employ any known bus structures or architectures, including a memory bus with memory controller, a peripheral bus, and a local bus. The system memory 369 includes read-only memory ("ROM") 370 and random access memory ("RAM") 372. A basic input/output system ("BIOS") 371, which can form part of the ROM 370, contains basic routines that help transfer information between elements within the networked subscriber devices 306, such as during start-up.

The networked subscriber devices 306 may also include one or more media drives 373, e.g., a hard disk drive, magnetic disk drive, WORM drive, and/or optical disk drive, for reading from and writing to computer-readable storage media 374, *e.g*., hard disk, optical disks, and/or magnetic disks. The nontransitory computer-readable storage media 374 may, for example, take the form of removable media. For example, hard disks may take the form of a Winchester drive, and optical disks can take the form of CD-ROMs, while magnetic disks can take the form of magnetic floppy disks or diskettes. The media drive(s) 373 communicate with the processing unit 368 via one or more system buses. The media drives 373 may include interfaces or controllers (not shown) coupled between such drives and the system bus, as is known by those skilled in the relevant art. The media drives 373, and their associated nontransitory computer-readable storage media 374, provide nonvolatile storage of computer readable instructions, data structures, program modules and other data for the networked subscriber devices 306. Although described as employing computer-readable storage media 374 such as hard disks, optical disks and magnetic disks, those skilled in the relevant art will appreciate that networked subscriber devices 306 may employ other types of nontransitory computer-readable storage media that can store data accessible by a computer, such as magnetic cassettes, flash memory cards, digital video disks ("DVD"), Bernoulli cartridges, RAMs, ROMs, smart cards, etc. Data or information, for example, electronic or digital files or data or metadata related to such can be stored in the nontransitory computer-readable storage media 374.

Program modules, such as an operating system, one or more application programs, other programs or modules and program data, can be stored in the system memory 369. Program modules may include specific instructions that specifically program the networked subscriber device 302 to operate, act, perform, function, or achieve as a special purpose computer that operates, acts, performs, functions, or achieves any result(s) explained herein with regard to, for example, one or more of the first networked subscriber device 270, the second networked subscriber device 520, the third networked subscriber device 530, the networked device 112 external to the threat management system 504, the threat management system 504, etc. including accessing a Website, extranet site or other site or services (e.g., Web services) and associated WebPages, other pages, screens or services hosted by the threat management application server 302.

In particular, the system memory 369 may include communications programs that permit the networked subscriber devices 306 to exchange electronic or digital information or files or data or metadata with the threat management application server 302. The communications programs may, for example, be a Web client or browser that permits the networked subscriber devices 306 to access and exchange information, files, data and/or metadata with sources such as Web sites of the Internet, corporate intranets, extranets, or other networks. Such may require that the networked subscriber devices 306 have sufficient right, permission, privilege or authority for accessing a given Website, for example, one hosted by the service provider sever computer system(s) 302. The browser may, for example, be markup language based, such as Hypertext Markup Language (HTML), Extensible Markup Language (XML) or Wireless Markup Language (WMI,), and may operate with markup languages that use syntactically delimited characters added to the data of a document to represent the structure of the document.

While described as being stored in the system memory 369, the operating system, application programs, other programs/modules, program data and/or browser can be stored on the computer-readable storage media 374 of the media drive(s) 373. An operator can enter commands and information into the networked subscriber devices 306 via a user interface 375 through input devices such as a touch screen or keyboard 376 and/or a pointing device 377 such as a mouse. Other input devices can include a microphone, joystick, game pad, tablet, imager, scanner, etc. These and other input devices are connected to the processing unit 368 through an interface such as a serial port interface that couples to the system bus, although other interfaces such as a parallel port, a game port or a wireless interface or a universal serial bus ("USB") can be used. A display or monitor 378 may be coupled to the system bus via a video interface, such as a video adapter. The networked subscriber devices 306 can include other output devices, such as speakers, printers, etc.

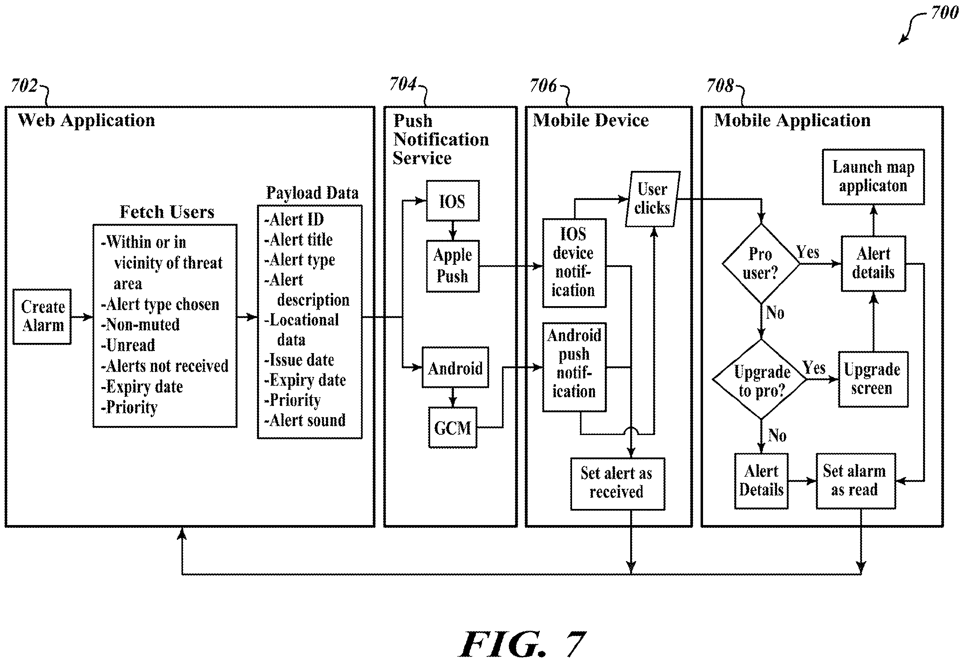

Figure 7 shows a flow diagram 700 of a workflow for sending an alert to a user. A web application 702 may create one or more alerts. In one implementation, the web application 702 is operated using the network 150 or the threat management application server 302 or the threat management system 504. These alerts from the web application 702 may be sent to the users who may be fetched on the basis of few parameters (e.g., within or in the vicinity of the threat area, alert type chosen, non-muted, unread, alerts not received, expiry date, priority etc). Later, the information to be send to the mobile device may be pulled which may be sent using the APIs. A Push Notification module 704 may be provided, which uses the APIs information regarding the alerts to send alerts from the web application to a mobile device 706 as a push notification to, for example, the iOS device or Android device utilizing one of Apple Push or GCM, respectively. The mobile device 706 may receive a push notification of the alerts for which the user thereof has opted to receive. The status of an alert having been received on the mobile device 706 or not may be captured in the web server 702. In one or more implementations, the mobile device 706 includes the first and second networked subscriber device 270, 520 in Figure 5.

Once the user has received the alert message, a mobile application 708 executing on the mobile device 706 may check if the user is registered user or Pro user. If the user is a Pro user, a detailed alert may be provided. If the user is not a registered user, the application may prompt the user to upgrade the user's account to become a Pro user and then display a detailed alert. In at least some implementations, if the user does not decide to become a Pro user, the mobile application may display less detail about the alert than is available to Pro users. In one or more implementations, the alert details will be shown through a map application (e.g., Google maps or the like) to provide better details on the information related to the threat.

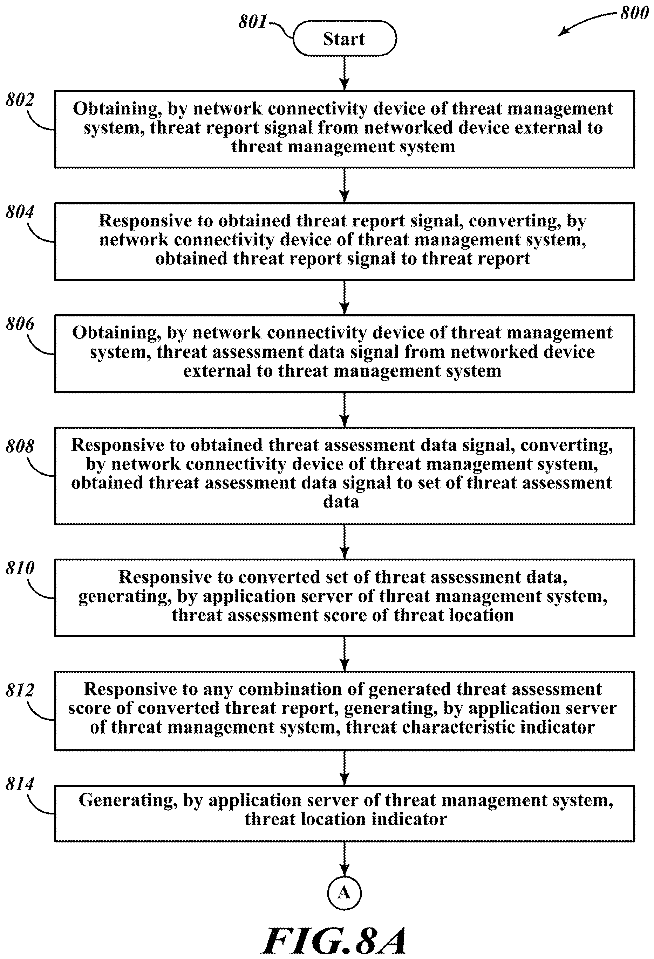

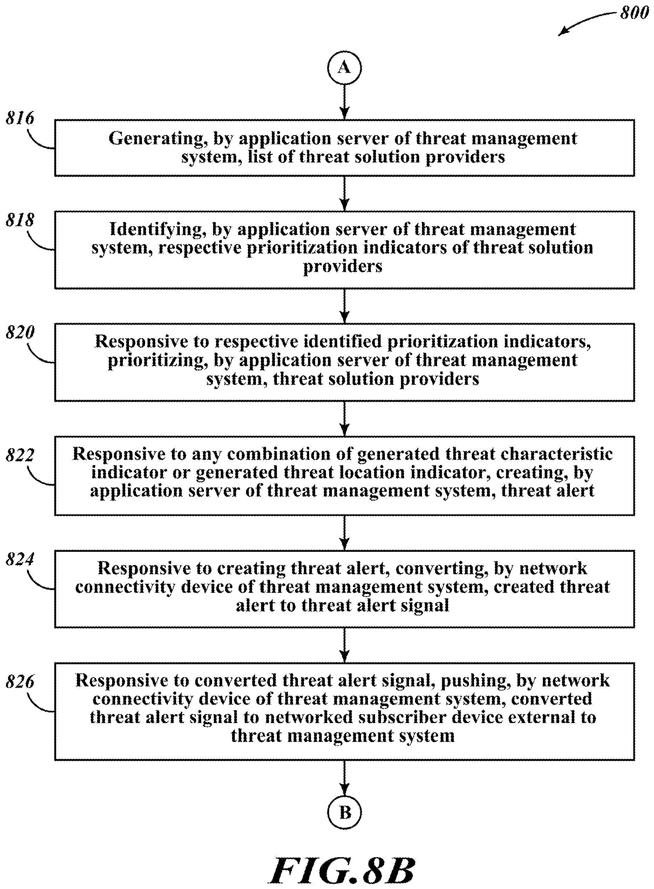

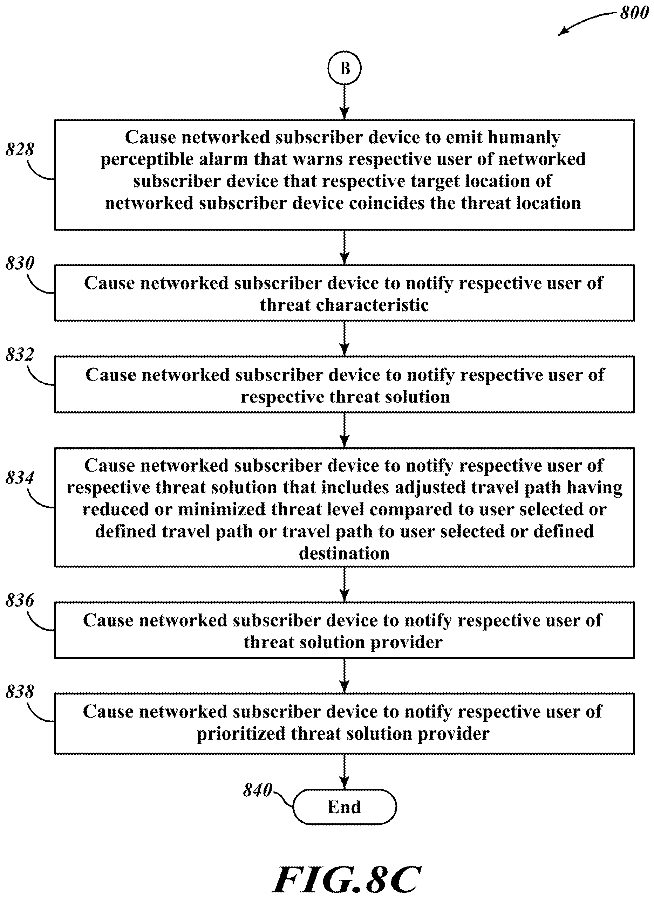

As shown in Figures 8A-8C, the alert system may implement a method 800 of operation for the threat management system 504 having the networked connectivity device 360 and the threat management application server 302. While the following disclosure explains the method 800 in a particular order and as having particular operations, acts, performances, functions, achievements, or elements, the alert system 300 may implement the method 800 in any order. Additionally or alternatively, the alert system 300 may implement the method 800 with more or fewer operations, acts, performances, functions, achievements, or elements and with one or more of operations, acts, performances, functions, achievements, elements, etc. Additionally or alternatively, the alert system 300 may implement the method 800 of operation for one or more of the first networked subscriber device 102, second networked subscriber device 110, third networked subscriber device 530, networked device 112 external to the threat management system 504, threat management system 504, networked subscriber device 306, networked device 304 external to the threat management application server 302, etc.

The method 800 may start at 801. At 802, the network connectivity device 360 of the threat management system 504 obtains a threat report signal from the given networked device external to the threat management system 504. At 804, responsive to the obtainment of the threat report signal, the network connectivity device 360 of the threat management system 504 may convert the obtained threat report signal to a threat report. At 806, the network connectivity device 360 of the threat management system 504 may obtain a threat assessment data signal from the given networked device external to the threat management system 504. At 808, responsive to the obtainment of the threat assessment data signal, the network connectivity device 360 of the threat management system 504 may convert the obtained threat assessment data signal to a set of threat assessment data. For example, the set of threat assessment data may include one or more of the following: statistical data for the threat location 550, statistical data for a location outside the threat location 550, historical data for the threat location 550, historical data for a location outside the threat location 550, etc. At 810, responsive to the set of threat assessment data, the application server 302 of the threat management system 504 may generate a threat assessment score of the threat location 550. For example, the threat management system 504 may include one or more of a neural network, other learning machine that learns from the set of threat assessment data, etc. As another example, the threat management system 504 may compare historical or statistical data of the threat location 550 to historical or statistical data of a location outside the threat location 550.

At 812, responsive to the threat assessment score or the threat report, the application server 302 of the threat management system 504 may generate a threat characteristic indicator. At 814, responsive to the threat assessment score or the threat report, the application server 302 of the threat management system 504 may generate a threat location indicator.

At 816, the application server 302 of the threat management system 504 may generate a list of threat solution providers. At 818, the application server 302 of the threat management system 504 may identify respective prioritization indicators of the threat solution providers. At 820, responsive to the respective identified prioritization indicators, the application server 302 of the threat management system 504 may prioritize the threat solution providers.

At 822, responsive to the generating of one or more of the threat characteristic indicator or the threat location indicator, the application server 302 of the threat management system 504 may create a threat alert. At 824, responsive to the creation of the threat alert, the network connectivity device 360 of the threat management system 504 may convert the threat alert to a threat alert signal. At 826, responsive to the threat alert signal, the network connectivity device 360 of the threat management system 504 may push the threat alert signal to a networked subscriber device 306 external to the threat management system 504.

At 828, the method 800 may include causing the networked subscriber device 306 to emit a humanly perceptible alarm that warns a respective user of the networked subscriber device 306 that a respective target location of the networked subscriber device 302 coincides with or is in the vicinity of the threat location 550. At 830, the method 800 may include may include causing the networked subscriber device 306 to notify the respective user of a threat characteristic of a reported or assessed threat at the threat location 550.

At 832, the method 800 may include causing the networked subscriber device 306 to notify the respective user of a respective threat solution to the threat at the threat location 550. At 834, the method 800 may include causing the networked subscriber device 306 to notify the respective user of a respective threat solution that includes an adjusted travel path having a reduced or minimized threat level as compared to a user selected or defined travel path or a travel path to a user selected or defined destination.

At 836, the method 800 may include causing the networked subscriber device 306 to notify the respective user of a threat solution provider. At 838, the method 800 may include causing the networked subscriber device 306 to notify the respective user of a prioritized threat solution provider.

The method 800 may end at 840.

The following discussion describes the high level features provided in the backend web application to support the objective of the alert system mobile application, which is a consumer threat & risk notification mobile application, as discussed above. This will include managing different admins and their jurisdictions, users, alerts, contents and security tools. The features discussed below include, application login, dashboard, social media monitoring, alert management, alerts - data collection configuration, mobile app user management, jurisdiction, web application user management, sales management, content management, and incident management.

In at least some implementations, the user logs in using a registered email address. A super admin or admin creates another user by specifying his email address. An auto-generated email may be sent to this email address which has a link by which the user can create his user account. The web application may provide the email address which will be used for the super admin login at the time of the application development, for example. The user can also change the password, once the user logs into the application.

As shown in Figure 14, a dashboard may also be provided, which may be the landing page when the user logs in. The dashboard shows an overview of the information relevant to every user. This information may include the latest updates, notifications, or graphical representation of the information of the data history, for example.

In at least some implementations, the web application may provide social media monitoring. For example, the user can monitor Twitter^{®}, Facebook^{®}, other social media applications, and/or news feeds from the application. The user can also add a Twitter^{®} handle along with hash tags for monitoring Twitter^{®} accounts. For Facebook^{®}, the user can add the user name along with filters to filter out the posts. The user can also provide the news feed link.

The web application also provides web application user management, which provides different user roles and access privileges provided to different users of the application. A super admin user may have all the privileges and create any users with any other roles. The application may have only one super admin who will be the owner of the application, for example. The web application may also have admin users. Based on territory or jurisdiction, the web application may have multiple admin users. The admin user(s) may be created also based on organizational structure. The admin user may have the privilege to create their own jurisdiction, manage the alerts and its types, users such as content editors, mobile users and operators. The web application may also have content editors, which are users that are responsible for editing the contents in the data, location, etc. The web application may also have operators, which may be responsible for creating and managing the alerts and providing the SOS support.

The web application may also provide alert management. The alert management section of the web application allows the user to manage the different alert types and alerts which are tagged under the respective alert types. The user may also be able to assign an icon for every alert type. Non-limiting examples of some of the alert types include: sex offenders nearby, active crimes, Amber alerts, security alerts, and weather alerts (e.g., earthquakes).

In at least some implementations, users can create different alerts with details such as alert title and alert message, can upload an image, the validity of the alert (e.g., expiry date), and can set a priority for the alert. While creating an alert, the jurisdiction can be selected and these alerts will be received by mobile users who are currently in the selected jurisdiction or have saved any of places in that jurisdiction as their location(s).

The web application may also include an alerts-Data Collection Configuration section, which provides various methods for creating alerts, including generating manual content, uploading formatted data, using APIs, or using live feeds.

In at least some implementations, the user can directly create an alert and configure when the alert need to be triggered. The created alert can be an active alert or a static alert. After choosing the alert type, the title of the alert along with the detailed message is to be provided. The user can upload any pictures and set the validity along with the priority of the alert. The jurisdiction of the alert may also be provided so that all the mobile users with that jurisdiction may receive this alert message. In at least some implementations, a user can only set a jurisdiction to an alert to which the user belongs.

In at least some implementations, the user can upload an spreadsheet file or comma separated values (CSV) file with the list of alerts. This could be a list of sex offenders or a file that contains the daily alert updates, for example. The user could either download the spreadsheet template from the web application and fill in the sheet with the data or use the sheet with any data format. In the latter format, the user may be required to manually map the fields.

The steps to upload a spreadsheet or CSF file may be as follow. Initially, the user may upload a spreadsheet file or a CSV file to the web application and the data may be uploaded to the alert system. Once configured, the uploading file (e.g., spreadsheet) may be reused. Once uploaded, the fields in the document may be mapped with the fields in the web application. Once this mapping is done, the values in the document may be displayed based on the mapping and user may manually edit any values as needed. The values may be converted to an alert format which can be reviewed and published as alert.

In at least some implementations, the alerts can be integrated with different APIs available. There may be a first time configuration that has to be done for integrating the APIs. A list of all APIs that need to be integrated may be identified and the web application may handle the data provided by the alert. The steps to be followed to configure an API are as follows. Initially, an HTTP restful method and the API web link is to be provided along with the API parameters and header details to get the API schema. The fields retrieved from the schema may be mapped to the fields in the web application and previewed to check for compatibility. The time interval to trigger the API may also be set to retrieve as desired.

In at least some implementations, the live feeds from different sources may be integrated with the web application. There may be a manual interaction in identifying and converting the live feed to an alert, for example. In at least some implementations, there may be a first time configuration that for integrating the Live Feeds. Example steps to be followed to configure a Live Feed are as follows. The Live Feed web link is provided along with API parameters and header details to get the API schema. The fields retrieved from the schema are mapped to the fields in the web application and previewed to check for compatibility.

The web application may also provide mobile app user Management. A mobile user may be a guest user, a registered user, or a premium user. Guest users are those users who want to interact with the mobile application without any registration. This type of user may not need any user credentials to access the application and may have limited access to the application. Registered users are those users who have registered with the alert system through the mobile application. These users can login from any device and the users can access their profile data. Premium users are registered users who have subscribed as a "Pro" user by paying a small fee. These users may receive more information regarding alerts and may receive SOS support.

The technical details of the mobile device used by the user may be stored in the web application such as the OS, OS version, app version, etc. The profile details of the registered and premium users may also be stored in the application along with saved location, alert preference and alert reception logs.

The web application may also provide a jurisdiction section. Jurisdiction is a concept used in the application that helps to manage the delivery of alerts to a particular region (e.g., neighborhood, city, county, state, region of a country, entire country). The super admin user or the admin may be able to add jurisdictions in the limit defined to them. The admin user may have one or more jurisdictions if required where they will be able to manage the alerts. An alert can be triggered to a combination of jurisdictions or subset of a jurisdiction.

The web application also provides security tools management. In at least some implementations, the admin user will be able to configure the list of items that will be displayed in the mobile application. The admin user can also add the companies who sell this item along with its location. These companies may be plotted in a map viewable in the mobile application according to the proximity. Also, the admin user may mark a vendor as premium so that the vendor may always be displayed as the first item in a company listing.

The web application also provides content management, which allows users to manage the contents which can be done in the web backend and, the mobile users may be able to view this information on their mobile devices. Content management may have content categories to which the different contents will be tagged. This may include important information for the mobile users, such as details regarding hospitals, police and fire departments, etc., which the mobile user can search by location.

The web application also provides incident management, which provides methods by which the incidents originated from the mobile application can be handled by the control center. Any mobile user may send information to the server. The information sent could be a reported incident or a call for help incident. Also, this feature can be restricted to registered users in order to reduce the number of false incidents. In at least some implementations, this module can be made to handle and provide early warning alerts specifying the users that this message is not yet verified. Early warning messages could be based on incidents reported from mobile devices which are not yet verified.

The discussion below describes the high level features of creating a consumer threat and risk notification mobile application with an incident reporting tool for the user to send and receive information relating to known or perceived threats in the geographic area around their location. Particular features discussed below include application access, my alerts, map, alert preference, my locations, security tools, create report or "report it," emergency numbers/call 911, SOS, and register and premium users.

The mobile application may be available for download by an application provider, such as Google Play Store, Apple store, etc. Users can access the mobile application as a guest user without registration. As discussed above, guest users may have limited access to the features of the application.

Users can create an account by filling in a registration form via their mobile device. User can login from any device and they can access their profile data. Premium users are those registered users who have paid a fee. These users may get more information regarding the alerts and may get SOS support.

All of the live alerts received by the users based on their alert preference and location may be displayed promptly and the alerts which are expired will be displayed in an alert history. Alerts may be received on the users' mobile devices as push notifications. Each alert may have a detail page where additional information of the particular alert may be displayed. The additional alert information may include alert type, alert title, alert description, issued date and time, expiry date and time, option to mute the alert, option the share the alert, etc. Additionally, the alert location may be displayed in a map viewable by the user. In at least some implementations, an image associated with the alert may also be displayed.

The user may be able to mute the alert for a period of time (e.g., 1 week, 30 days, always). The user may also share the alert through various channels, including email, social media, text message, etc. In at least some implementations, the mobile application provides an option for viewing information regarding police departments, hospitals and fire departments, in case the user needs to view or contact the nearest department for help.

Since alerts may be triggered from the server to those devices in one or more specific locations, the current location of the user may be pinged from the device when the user's location is changed by certain distance.

The map section of the mobile application displays a geographical map of the region in which the user accesses the application. In at least some implementations, a map provided by Google may be used to display the map. Alerts in the region viewed by the user may be plotted in the map. Also, upon zooming out, the alerts may be combined and displayed using a Marker Clustering technique. This feature may help the user to evaluate the relative security of a particular locality. In at least some implementations, the user may also have an option to view hospitals, fire departments, police department and other categories that are uploaded from the web application.

The alert preference section of the mobile application allows the user to choose the alert types that the user receives from the application. Different alert types may include, for example, sex offenders nearby, active crimes, Amber alerts, security alerts, and weather alerts (e.g., earthquakes).

In at least some implementations, the user can also select the priority of the alert. The priority may be listed as High, Medium, Low, Safe, for example. A user who selects a particular issue will only receive those alert types and priority alerts.

The my location section of the mobile application allows the user to provide the application with a number (e.g., three, five, ten) desired locations, so that the user can receive alerts for those locations. Apart from the locations saved for the particular user, alerts may also be sent based on the current location of the user, assuming the application is able to retrieve the location of the mobile device. The user can also choose the preferred alert type for each location saved under their account, so that the user may only receive those types of alerts for that particular location.

The security tools section of the mobile application provides an option for the user to buy security tools from the application. There may be an option to obtain information about Security Officers, Alarm Systems, Camera systems, Firearms, etc. There may also be a detail screen, where the locations of companies that sell the item or service may be displayed based on the user's location proximity. If there are any sponsored companies, then they may be listed initially in the list of companies.

Users can use the create report or "report it" feature to report an incident. Here, the user can upload a picture by capturing it from the camera of their mobile device and can also add comments related to the incident. Other details such as the date and time, priority of the incident, and alert type may also be provided by the user. The location of the user will also be sent by the mobile device from the map. The user may be able to enter the address of the incident which will be plotted on the map and displayed. An operator of the alert system can view this information and take appropriate actions.

In at least some implementations, the mobile application may allow the user to easily dial one or more emergency contacts (e.g., 3 contacts, 5 contacts) or to contact emergency response personnel (e.g., make a "911 call").

In at least some implementations, the mobile application may also include a user selectable button or icon which causes the mobile device to rapidly contact the control center of the alert system. For example, the button or icon may cause the mobile device to automatically place a call to the control center, or may cause the mobile device to send a text-based message (*e*.*g*., email, text message) to the control center.

A user can register with the alert system by completing a form and by validating an email address. A registered user may get additional features as compared to the guest user, such as adding emergency contacts and using the application in different devices. A registered user may also have the provision to pay a small subscription amount and become a premium user. The payment of the premium service may be made as "in-app purchases" through one or more application stores.

The following discussion provides technical information for a web application and mobile application for an example implementation of an alert system of the present disclosure. It should be appreciated that the information provided as a nonlimiting example for explanatory purposes. In at least some implementations, Node.js programming language may be used for backend programming and AngularJS programming language may be used for frontend programming. The framework may be implemented using LoopBack framework, the database system may be implemented using MongoDB, and the geospatial indexes and queries may be implemented using 2dsphere Indexes. Various browsers may be supported (e.g., Firefox Version (41.0.2 to 49.0.2), Chrome Version (47.0.2526.73 to 54.0.2840.99), Safari Version (9.0 to 10.0), IE Version 11.0).

Node.js^{®} may be used for backend or server side programming. Nodej s uses an event-driven, non-blocking I/O model that makes it lightweight and efficient. Node.js package ecosystem, npm, is the largest ecosystem of open source libraries in the world. Node.js^{®} is a JavaScript runtime language built on Chrome's V8 JavaScript engine. Node.js may be an advantageous choice for event (call-back) based and real-time systems. The excellent performance and scalability characteristics of Node.j s allow faster development times.

AngularJS may be used for frontend programming. AngularJS enables extension of HTML, making it extraordinarily expressive, readable, and quick to develop. AngularJS is a toolset for building the framework and it is fully extensible and works well with other libraries. Every feature can be modified or replaced to suit the unique development workflow and feature needs. Angular is becoming the de facto JavaScript framework for front-end development. It allows for DOM manipulations without writing spaghetti code. Data bindings are another excellent feature, alongside declarative nature, modularity, etc., driving Angular adaption.

LoopBack framework is a highly-extensible, open-source Node.j s framework. LoopBack allows fast turnaround times for rapid development and deployment. LoopBack has the ability to generate end-to-end REST APIs, saving a huge chunk of development cost.

MongoDB is a free and open-source cross-platform document-oriented database program. Classified as a NoSQL database program, MongoDB uses JSON-like documents with schemas. MongoDB is developed by MongoDB Inc., and is free and open-source, published under a combination of the GNU Affero General Public License and the Apache License. MongoDB offers excellent performance and scalability for systems that do not require relational databases' ACID properties or transactions. It also has built-in support for storing and processing geo-spatial objects.

2dsphere index is a technology for geospatial indexes and queries and supports all MongoDB geospatial queries: queries for inclusion, intersection and proximity. 2dsphere index helps to calculate geometry over an Earth-like sphere. Location data can be stored as GeoJSON objects with this coordinate-axis order: longitude, latitude.

The mobile application may be implemented as a native application for various operating systems, such as Android and/or iOS. In at least some implementations, Java is used as the programming language for the Android version of the application and SWIFT 3.0 is used as the programming language for the iOS version of the application. RESTful JSON may be used for the API/ Web Services, for example. The database may be SQLite, for example.

Generally, a native application (or "native app") is an application program that has been developed for use on a particular platform or device. Because native apps are written for a specific platform, they can interact with and take advantage of operating system features and other software that is typically installed on that platform. In at least some implementations, the mobile applications may be developed as native applications instead of a cross platform application. This provides better performance of the mobile app and increases the probability that users are able to receive the alert messages as push notifications.

Swift is a general-purpose, multi-paradigm, compiled programming language developed by Apple Inc. for iOS, macOS, watchOS, tvOS, and Linux. Swift is intended to be more resilient to erroneous code ("safer") than Objective-C, and more concise.

RESTful web services are one way of providing interoperability between computer systems on the Internet. REST-compliant web services allow requesting systems to access and manipulate textual representations of web resources using a uniform and predefined set of stateless operations.

SQLite is a relational database management system contained in a C programming library which is embedded into the end program. SQLite is ACID-compliant and implements most of the SQL standard, using a dynamically and weakly typed SQL syntax that does not guarantee the domain integrity.

As discussed above, the alert system may need to account for the current location of a user of the system. This is to send the alerts that are applicable to that particular location. To accomplish such, the mobile app may periodically (e.g., constantly) ping the web server with the current geo coordinates of the user. Hence, a background service may be enabled in the mobile device that may send the current geo location of the user when the user has moved a certain distance (e.g., at least 500 meters). The alert may be sent to the user's device as push notification, as discussed above. But since the push notification is seen as "Sent and Forget", in at least some implementations a workflow is provided by which the system ensures the receipt of alert messages in the user's device. Also, silent pushes may not be preferred due to the low assurance of notification reaching the mobile device. For sending images as part of alerts to mobile device in large number, Content Delivery Network (CDN) technology may be utilized.

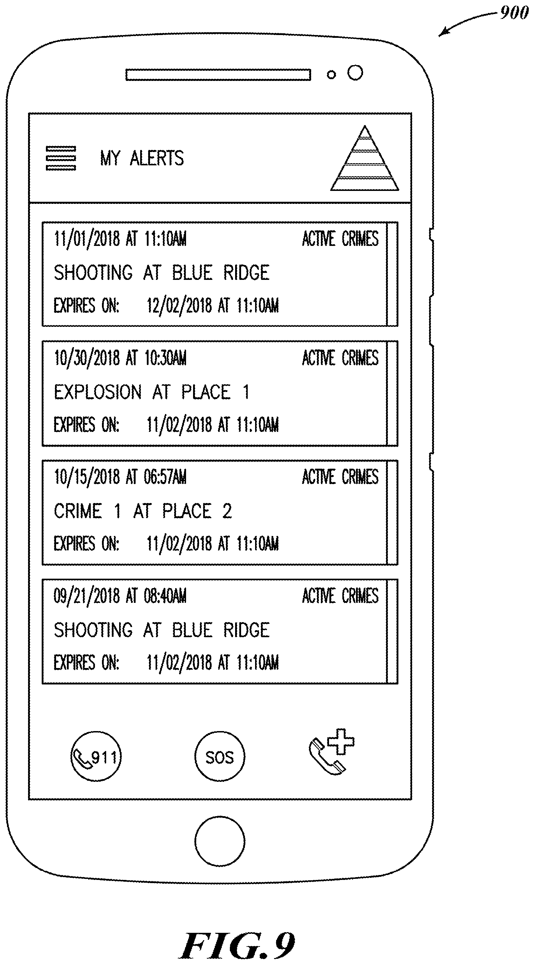

Figure 9 is a user interface for an alerts list landing screen 900 of a mobile application of an alert system, according to one illustrated implementation. On the screen 900, all of the live alerts received in the mobile application may be displayed with the relevant priorities. Both static and live alerts may be listed in the screen 900. There may be an option to call 911, signal an SOS to the alert system control center, or call the emergency contacts stored in the application.

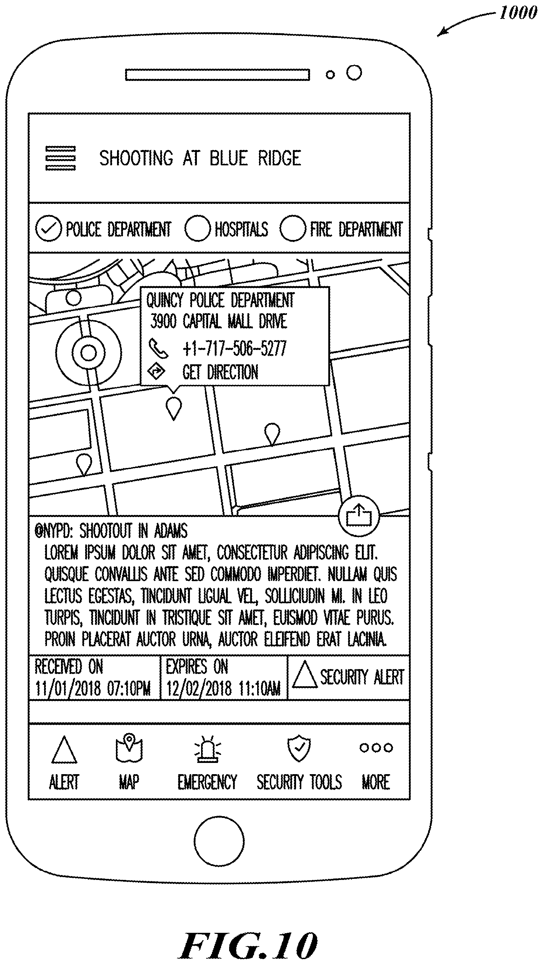

Figure 10 is a user interface for an alert details screen 1000 of a mobile application of an alert system, according to one illustrated implementation. The details of the alert may include the title, detailed message, creation date and time, images, expiration date and time, location, and an option to view the nearby police department, hospitals or fire department. The screen 1000 may also include an option to share the alert (e.g., email, text message, social media networks). The user can also mute this alert for a duration. This may not restrict a user from receiving similar alerts at the location when a person revisits the location at a later time.

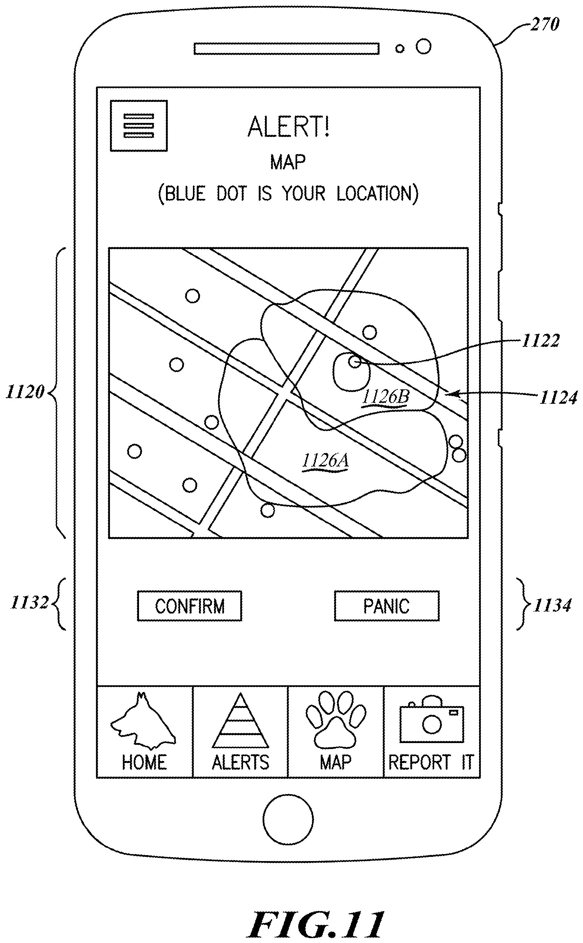

Figure 11 is a user interface for an alert details screen of a mobile application launching a map application in association with an alert system, according to one illustrated implementation.

Additionally or alternatively, the humanly perceptible alarm that warns the user of the mobile device 270 may include a map 1120 as shown in Figure 11. The map 1120 may include a target location indicator 1122 of the target location of the mobile device 270. Additionally or alternatively, the map 1120 may include a threat location indicator 1124 of the threat location 550. The threat location indicator 1124 may include multiple zones 1126A, 1126B as shown in Figure 11. The zones 1126A, 1126B may correspond to respective threat characteristics of respective areas at the threat location 550. Additionally or alternatively, a dimension of the threat location indicator 1124 may vary responsive to the dimension of the threat location 550. Additionally alternatively, the dimension the threat location indicator 1124 may vary responsive to the dimension of the target location of the mobile device 270. Additionally or alternatively, a visual characteristic of the threat location indicator 1124 may vary responsive to the threat characteristic. The visual characteristic of the threat location indicator 1124 may include one or more of color, intensity, opacity, pattern, border, etc., for example. Additionally or alternatively, respective dimensions of one of, some of, or each of the zones 1126A, 1126B may vary responsive to the dimension of the threat location 550. Additionally or alternatively, the respective dimensions of one of, some of, or each of, the zones 1126A, 1126B may vary responsive to the dimension of the target location of the mobile device 270. Additionally or alternatively, respective visual characteristics of the zones 1126A, 1126B may vary responsive to the threat characteristic. The respective visual characteristics of the zones 1126A, 1126B may include one or more of color, intensity, opacity, pattern, border, etc., for example.

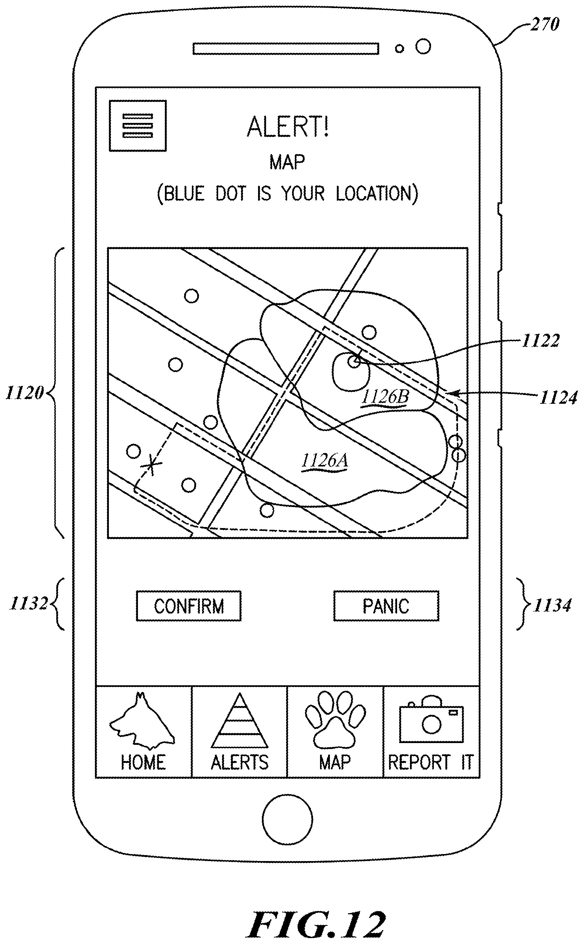

Figure 12 is a user interface for an alert details screen of a mobile application showing escape routes through a map application in association with an alert system, according to one illustrated implementation.

Additionally or alternatively, a threat solution may be provided by the network 150 and may include a threat solution to improve a likelihood of escaping or avoiding the threat at the threat location 550. For example, the threat solution may include an escape path. The escape path may include a travel path to a "rally point" as shown in Figure 12. The rally point may include a nearby location outside the threat location 550. Additionally or alternatively, the rally point may include a nearby location inside the threat location 550. For example, the rally point may include a nearby police station. The rally point may include a previously user selected or defined rally point. For example, the user of the mobile device 270 may select or define a particular rally point via a rally point interface of the mobile device 270. Additionally or alternatively, the threat management system 504 may determine or identify the rally point. The rally point may vary responsive to the threat characteristic of the threat at the threat location 550. For example, the rally point may include a position nearest to the target location and outside the threat location 550. Additionally or alternatively, the escape path may vary responsive to the target location of the mobile device 270. The escape path may vary responsive to the threat characteristic of the threat at the threat location 550. For example, the escape path may vary to minimize a travel distance to the rally point that includes the nearby location outside the threat location 550 (Figure 12 - escape path having long dashes). As another example, the escape path may vary to reduce or minimize the threat characteristic in, along, adjacent, or near the escape path as compared to the threat characteristic in, along, adjacent, or near another escape path (Figure 12 - escape path having medium and short dashes). Additionally or alternatively, the threat management system 504 may cause the mobile device 270 to notify the others user of the second, third networked subscriber device of the threat.

## Claims

1. A mobile device case (120) for housing a mobile device (270), the mobile device case (120) comprising:
a housing shaped and sized to be coupled to a mobile device (270);
one or more sound sensors (250) operative to collect sound data based on an acoustic source including gunfire or sound from other weapons, the sound data including an acoustic information, the acoustic information including indirect sound signals reflected from objects near the acoustic source;
a communication device (310) positioned within the housing; and
at least one processor positioned within the housing and communicatively coupled to the one or more sound sensors (250) and the communication device (310), in operation, the at least one processor:
receives the indirect sound signals included in the acoustic information from the one or more sound sensors (250);
detects gunfire or sound from other weapons based on the received indirect sound signals in the acoustic information; and
causes the communication device (310) to transmit data to the mobile device (270) indicating that gunfire or sound from other weapons was detected.

2. The mobile device case (120) of claim 1, wherein the one or more sound sensors (250) includes a plurality of sound sensors (250).

3. The mobile device case (120) of claim 2, wherein the plurality of sound sensors (250) includes:
a first sound sensor positioned on a first side of the housing, the first sound sensor receiving a sound from an object from a first distance;
a second sound sensor positioned on a second side of the housing, the second sound sensor receiving the sound from the object from a second distance; and
a third sound sensor positioned on a third side of the housing, the third sound sensor receiving the sound from the object from a third distance;
wherein at least one of the first, second, and third distance is different from another of the first, second, and third distance, and the at least one processor analyzes the first, second, and third distances to extract a location of the object based on the sound from the object.

4. The mobile device case (120) of claim 1, wherein the sound signals include at least one of frequency patterns associated with a sonic boom and range of frequency spectrums associated with a sonic boom.

5. The mobile device case (120) of claim 1, further comprising:
a power source (230) coupled to the at least one processor, the communication device (310), and the one or more sound sensors (250),
wherein the power source (230) is electrically coupleable to a power source of the mobile device, and the power source (230), in use, supplies energy to the at least one processor, the communication device (310), the one or more sound sensors (250), and the power source of the mobile device.

6. The mobile device case (120) of claim 5, wherein the power source (230) includes at least one of a portable battery or a solar charger.

7. The mobile device case (120) of claim 6, wherein the portable battery includes a Lithium-ion battery.

8. The mobile device case (120) of claim 1, further comprising:
a light emitting source (260) mounted on a surface of the housing and coupled to the at least one processor, in operation, the at least one processor causes the light emitting source (260) to emit multiple colors of lights indicative of a determined level of threat associated with the detected gunfire or sound from other weapons.

9. The mobile device case (120) of claim 8, wherein the multiple colors of lights includes:
a first color indicative of a first level of threat associated with the object; and
a second color, different from the first color, indicative of a second level of threat associated with the detected gunfire or sound from other weapons.

10. The mobile device case (120) of claim 8, wherein the at least one processor causes the light emitting source (260) to emit light according to a pattern or frequency that is based on a distance from a location of an object associated with the detected gunfire or sound from other weapons.

11. The mobile device case (120) of claim 1, further comprising:
a plurality of openings in the mobile device case (120), the plurality of openings capable of accommodating various buttons in the mobile device.

12. The mobile device case (120) of claim 1, wherein the one or more sound sensors (250) are spaced apart within the housing.

## Patentansprüche

1. Eine Hülle (120) für eine mobile Vorrichtung zum Unterbringen einer mobilen Vorrichtung (270), wobei die Hülle (120) für eine mobile Vorrichtung Folgendes beinhaltet:
ein Gehäuse, das geformt und bemessen ist, um an eine mobile Vorrichtung (270) gekoppelt zu werden;
einen oder mehrere Schallsensoren (250), die wirksam sind, um auf einer Gewehrfeuer oder Schall von anderen Waffen umfassenden Akustikquelle basierende Schalldaten zu erfassen, wobei die Schalldaten akustische Informationen umfassen, wobei die
akustischen Informationen von Gegenständen in der Nähe der Akustikquelle reflektierte indirekte Schallsignale umfassen;
eine Kommunikationsvorrichtung (310), die innerhalb des Gehäuses positioniert ist; und
mindestens einen Prozessor, der innerhalb des Gehäuses positioniert ist und kommunikationsfähig an den einen oder die mehreren Schallsensoren (250) und die Kommunikationsvorrichtung (310) gekoppelt ist, wobei im Betrieb der mindestens eine Prozessor:
die in den akustischen Informationen von dem einen oder den mehreren Schallsensoren (250) enthaltenen indirekten Schallsignale empfängt;
Gewehrfeuer oder Schall von anderen Waffen basierend auf den empfangenen indirekten Schallsignalen in den akustischen Informationen erkennt; und
die Kommunikationsvorrichtung (310) veranlasst, Daten an die mobile Vorrichtung (270) zu übertragen, die angeben, das Gewehrfeuer oder Schall von anderen Waffen erkannt wurde.

2. Hülle (120) für eine mobile Vorrichtung gemäß Anspruch 1, wobei der eine oder die mehreren Schallsensoren (250) eine Vielzahl von Schallsensoren (250) umfassen.

3. Hülle (120) für eine mobile Vorrichtung gemäß Anspruch 2, wobei die Vielzahl von Schallsensoren (250) Folgendes umfasst:
einen ersten Schallsensor, der auf einer ersten Seite des Gehäuses positioniert ist, wobei der erste Schallsensor einen Schall von einem Gegenstand aus einer ersten Entfernung empfängt;
einen zweiten Schallsensor, der auf einer zweiten Seite des Gehäuses positioniert ist, wobei der zweite Schallsensor den Schall von dem Gegenstand aus einer zweiten Entfernung empfängt;
einen dritten Schallsensor, der auf einer dritten Seite des Gehäuses positioniert ist, wobei der dritte Schallsensor den Schall von dem Gegenstand aus einer dritten Entfernung empfängt;
wobei mindestens eine von der ersten, der zweiten und der dritten Entfernung von einer anderen von der ersten, der zweiten und der dritten Entfernung verschieden ist und der mindestens eine Prozessor die erste, die zweite und die dritte Entfernung analysiert, um einen Ort des Objekts basierend auf dem Schall von dem Objekt zu extrahieren.

4. Hülle (120) für eine mobile Vorrichtung gemäß Anspruch 1, wobei die Schallsignale mindestens eines von mit einem Überschallknall assoziierten Frequenzmustern und einem mit einem Überschallknall assoziierten Bereich von Frequenzspektren umfassen.

5. Hülle (120) für eine mobile Vorrichtung gemäß Anspruch 1, die ferner Folgendes beinhaltet:
eine Leistungsquelle (230), die an den mindestens einen Prozessor, die Kommunikationsvorrichtung (310) und den einen oder die mehreren Schallsensoren (250) gekoppelt ist,
wobei die Leistungsquelle (230) elektrisch an eine Leistungsquelle der mobilen Vorrichtung gekoppelt werden kann und die Leistungsquelle (230) im Gebrauch dem mindestens einen Prozessor, der Kommunikationsvorrichtung (310), dem einen oder
den mehreren Schallsensoren (250) und der Leistungsquelle der mobilen Vorrichtung Energie zuführt.

6. Hülle (120) für eine mobile Vorrichtung gemäß Anspruch 5, wobei die Leistungsquelle (230) mindestens eines von einer tragbaren Batterie oder einem Solarladegerät umfasst.

7. Hülle (120) für eine mobile Vorrichtung gemäß Anspruch 6, wobei die tragbare Batterie eine Lithiumionenbatterie umfasst.

8. Hülle (120) für eine mobile Vorrichtung gemäß Anspruch 1, die ferner Folgendes beinhaltet:
eine Leuchtquelle (260), die auf einer Oberfläche des Gehäuses angebracht ist und an den mindestens einen Prozessor gekoppelt ist, wobei im Betrieb der mindestens eine Prozessor die Leuchtquelle (260) veranlasst, mehrere Farben von Lichtern auszustrahlen, die einen mit dem erkannten Gewehrfeuer oder Schall von anderen Waffen assoziierten bestimmten Bedrohungsgrad angeben.

9. Hülle (120) für eine mobile Vorrichtung gemäß Anspruch 8, wobei die mehreren Farben von Lichtern Folgendes umfassen:
eine erste Farbe, die einen mit dem Gegenstand assoziierten ersten Bedrohungsgrad angibt; und
eine von der ersten Farbe verschiedene zweite Farbe, die einen mit dem erkannten Gewehrfeuer oder Schall von anderen Waffen assoziierten zweiten Bedrohungsgrad angibt.

10. Hülle (120) für eine mobile Vorrichtung gemäß Anspruch 8, wobei der mindestens eine Prozessor die Leuchtquelle (260) veranlasst, Licht gemäß einem Muster oder einer Frequenz auszustrahlen, das bzw. die auf einer Entfernung von einem Ort eines mit dem erkannten Gewehrfeuer oder Schall von anderen Waffen assoziierten Gegenstands basiert.

11. Hülle (120) für eine mobile Vorrichtung gemäß Anspruch 1, die ferner Folgendes beinhaltet:
eine Vielzahl von Öffnungen in der Hülle (120) für eine mobile Vorrichtung, wobei die Vielzahl von Öffnungen in der Lage ist, verschiedene Tasten in der mobilen Vorrichtung aufzunehmen.

12. Hülle (120) für eine mobile Vorrichtung gemäß Anspruch 1, wobei der eine oder die mehreren Schallsensoren (250) innerhalb des Gehäuses voneinander beabstandet sind.

## Revendications

1. Un boîtier (120) de dispositif mobile pour abriter un dispositif mobile (270), le boîtier (120) de dispositif mobile comprenant :
une coque conformée et dimensionnée pour être accouplée à un dispositif mobile (270);
un ou plusieurs capteurs sonores (250) ayant pour fonction de recueillir des données sonores sur la base d'une source acoustique incluant des coups de feu ou un son provenant d'autres armes, les données sonores incluant des informations acoustiques, les informations acoustiques incluant des signaux sonores indirects réfléchis depuis des objets près de la source acoustique ;
un dispositif de communication (310) positionné à l'intérieur de la coque ; et
au moins un processeur positionné à l'intérieur de la coque et couplé en communication avec les un ou plusieurs capteurs sonores (250) et le dispositif de communication (310), en fonctionnement, l'au moins un processeur :
reçoit les signaux sonores indirects inclus dans les informations acoustiques provenant des un ou plusieurs capteurs sonores (250) ;
détecte des coups de feu ou un son provenant d'autres armes sur la base des signaux sonores indirects reçus dans les informations acoustiques ; et
amène le dispositif de communication (310) à transmettre des données au dispositif mobile (270) indiquant que des coups de feu ou un son provenant d'autres armes ont été détectés.

2. Le boîtier (120) de dispositif mobile de la revendication 1, dans lequel les un ou plusieurs capteurs sonores (250) incluent une pluralité de capteurs sonores (250).

3. Le boîtier (120) de dispositif mobile de la revendication 2, dans lequel la pluralité de capteurs sonores (250) inclut :
un premier capteur sonore positionné sur un premier côté de la coque, le premier capteur sonore recevant un son provenant d'un objet à une première distance ;
un deuxième capteur sonore positionné sur un deuxième côté de la coque, le deuxième capteur sonore recevant le son provenant de l'objet à une deuxième distance ; et
un troisième capteur sonore positionné sur un troisième côté de la coque, le troisième capteur sonore recevant le son provenant de l'objet à une troisième distance ;
dans lequel au moins l'une des première, deuxième et troisième distances est différente d'une autre des première, deuxième et troisième distances, et l'au moins un processeur analyse les première, deuxième et troisième distances afin d'extraire un emplacement de l'objet sur la base du son provenant de l'objet.

4. Le boîtier (120) de dispositif mobile de la revendication 1, dans lequel les signaux sonores incluent au moins un paramètre parmi des motifs de fréquence associés à un bang sonique et une gamme de spectres de fréquence associés à un bang sonique.

5. Le boîtier (120) de dispositif mobile de la revendication 1, comprenant en outre :
une source d'alimentation (230) couplée à l'au moins un processeur, au dispositif de communication (310), et aux un ou plusieurs capteurs sonores (250),
dans lequel la source d'alimentation (230) est apte à être couplée électriquement à une source d'alimentation du dispositif mobile, et la source d'alimentation (230), lors de son utilisation, fournit de l'énergie à l'au moins un processeur, au dispositif de communication (310), aux un ou plusieurs capteurs sonores (250), et à la source d'alimentation du dispositif mobile.

6. Le boîtier (120) de dispositif mobile de la revendication 5, dans lequel la source d'alimentation (230) inclut au moins un élément parmi une batterie portable et un chargeur solaire.

7. Le boîtier (120) de dispositif mobile de la revendication 6, dans lequel la batterie portable inclut une batterie au lithium-ion.

8. Le boîtier (120) de dispositif mobile de la revendication 1, comprenant en outre :
une source émettrice de lumière (260) montée sur une surface de la coque et couplée à l'au moins un processeur, en fonctionnement, l'au moins un processeur amène la source émettrice de lumière (260) à émettre de multiples couleurs de lumières indiquant un niveau de menace déterminé associé aux coups de feu ou au son provenant d'autres armes détectés.

9. Le boîtier (120) de dispositif mobile de la revendication 8, dans lequel les multiples couleurs de lumières incluent :
une première couleur indiquant un premier niveau de menace associé à l'objet ; et
une deuxième couleur, différente de la première couleur, indiquant un deuxième niveau de menace associé aux coups de feu ou au son provenant d'autres armes détectés.

10. Le boîtier (120) de dispositif mobile de la revendication 8, dans lequel l'au moins un processeur amène la source émettrice de lumière (260) à émettre de la lumière selon un motif ou une fréquence qui sont basés sur une distance à partir d'un emplacement d'un objet associé aux coups de feu ou au son d'autres armes détectés.

11. Le boîtier (120) de dispositif mobile de la revendication 1, comprenant en outre :
une pluralité d'ouvertures dans le boîtier (120) de dispositif mobile, la pluralité d'ouvertures étant aptes à accueillir divers boutons du dispositif mobile.

12. Le boîtier (120) de dispositif mobile de la revendication 1, dans lequel les uns ou plusieurs capteurs sonores (250) sont espacés les uns des autres à l'intérieur de la coque.
